# EUROPÄISCHE PATENTSCHRIFT

(11) **EP 0 524 640 B1**
(45) Veröffentlichungstag und Bekanntmachung des Hinweises auf die Patenterteilung: **29.01.1997**
(21) Anmeldenummer: 92112690.0
(22) Anmeldetag: 24.07.1992
(51) Int. Cl.: C07F 9/46, C08K 5/5377

(54) **Diarylphosphinigsäure-arylester, ein Verfahren zu ihrer Herstellung und deren Verwendung zur Stabilisierung von Kunststoffen, insbesondere Polyolefinformmassen**
Diarylphosphinous acid arylesters, process for their preparation and their use to stabilize polymers, in particular polyolefin moulding compositions
Arylesters de l'acide diarylphosphineux, procédé de leur préparation et leur utilisation pour stabiliser des matières synthétiques, en particulier des matières moulables polyoléfiniques

(30) Priorität: 26.07.1991 DE 4124790
(43) Veröffentlichungstag der Anmeldung: 27.01.1993
(73) Patentinhaber: HOECHST AKTIENGESELLSCHAFT, 65926 Frankfurt am Main (DE)
(72) Erfinder: Regnat, Dieter, Dr., W-6000 Frankfurt am Main 71 (DE); Böhshar, Manfred, Dr., W-6233 Kelkheim (Taunus) (DE); Kleiner, Hans-Jerg, Dr., W-6242 Kronberg/Taunus (DE); Pfahler, Gerhard, Dr., W-8900 Augsburg (DE)

(56) Entgegenhaltungen:
- DE-B- 1 084 263
- US-A- 3 953 388
- US-A- 4 025 570
- US-A- 4 223 071
- CHEMICAL ABSTRACTS, vol. 97, 1982, Columbus, Ohio, US; abstract no. 144935j,

## Beschreibung

Neue Diarylphosphinigsäure-arylester, ein Verfahren zur ihrer Herstellung und deren Verwendung zur Stabilisierung von Kunststoffen, insbesondere Polyolefinformmassen

Die vorliegende Erfindung betrifft neue Diarylphosphinigsäure-aryl-ester, ein Verfahren zu ihrer Herstellung sowie deren Verwendung zur Stabilisierung von Kunststoffen, insbesondere von Polyolefinen.

Es ist bekannt, daß synthetische Polymere gegen unerwünschte oxidative, thermische und photochemische Schädigung während der Herstellung, der Verarbeitung und des Gebrauchs durch Stabilisatoren oder Stabilisatorsysteme geschützt werden müssen. Solche Stabilisatoren bestehen beispielsweise aus einem phenolischen Antioxidans, das insbesondere die Langzeit-Gebrauchsstabilität des Fertigteils gewährleisten soll und einem oder mehreren Costabilisatoren, die die Verarbeitungsstabilität regeln und teilweise auch die Wirkung der phenolischen Komponente synergistisch verstärken.

Zu den gebräuchlichen Costabilisatoren gehören beispielsweise ortho-alkylierte Arylphosphite und Phosphonite. Arylphosphonite sind bereits für verschiedene Anwendungen bekannt.

So offenbart US-A-4,223,071 Polymerzusammensetzungen, die für Isoliermaterial im Hochspannungsbereich verwendet werden können. Der Einsatz von Phosphorverbindungen wie z.B. Phenyl-diphenylphosphonigestern verhindert die Degradation des Materials durch die hohe elektrische Spannung.

Aus US-A-4,025,570 ist ein Verfahren zur Herstellung von 1,4-Dienen bekannt. Dazu werden als Katalysator Arylphosphonite wie z.B. Phenyl-diphenylphosphonit verwendet.

US-A-953,388 offenbart eine thermisch stabile aromatische Polycarbonat-Zusammensetzung, stabilisiert mit einem Epoxid und einem Phosphonit wie z.B. Ethyl-diphenylphosphonit.

Aus Chemical Abstracts, vol. 97, 1982, no. 144 935j sind Reaktionen zwischen Arylestern von diphenylphosphiniger Säure und 1-Nitro-1-propen bekannt.

Die in den US-PS 4,406,842 und 4,474,914 beschriebenen Phosphonigsäurediarylester weisen häufig nicht zufriedenstellende Stabilisatoreigenschaften auf, und ihre Synthese geht zudem von Organodichlorphosphanen aus, die technisch schwer zugänglich sind.

In der Praxis steht als einziges technisch verfügbares Vorprodukt Phenyldichlorphosphan zur Verfügung, durch das ausschließlich Benzolphosphonigsäure-diester zugänglich werden. Die angestrebten Eigenschaften von Stabilisatoren werden aber vielfach erst durch höher substituierte Arylgruppen am Phosphor erzielt.

Es ist aus der AU-OS 90/56 539 bekannt, daß Phosphonite durch Umsetzung von Phosphorigsäurediesterchloriden mit Grignard-Reagenzien hergestellt werden können. Die so erhaltenen Stabilisatoren enthalten zwar höher substituierte Arylgruppen am Phosphor, nachteilig beim Einsatz von Phosphiten und Phosphoniten ist jedoch, daß bei ihrer Hydrolyse saure Produkte anfallen können.

Aufgabe der vorliegenden Erfindung war es daher, neue Phosphorstabilisatoren zur Verfügung zu stellen, die einerseits die hohen Anforderungen der Praxis erfüllen und insbesondere auch bei der Einwirkung von Wasser nicht in saure Folgeprodukte zerfallen, gleichzeitig aber in einfacher Weise und in hoher Ausbeute durch ökologisch günstige Verfahren herstellbar sind.

Es wurde nun überraschend gefunden, daß Diarylphosphinigsäure-aryl-ester der Formel (I) (siehe Patentanspruch 1), diesen Erfordernissen in hohem Maße gerecht werden.

Gegenstand der Erfindung sind daher Diarylphosphinigsäure-aryl-ester der Formel (I), das sind Phosphinigsäure-arylester mit n = 1 sowie Diphosphinigsäurediarylester mit n = 2, in denen R¹ und R² unabhängig voneinander als einwertige Reste einen Phenyl- oder Naphthylrest darstellen, der jeweils 1 bis 5 Substituenten tragen kann, wobei die Substituenten gleich oder verschieden sind und einen nicht-aromatischen Kohlenwasserstoffrest, einen Alkoxyrest, Alkylthiorest oder Dialkylaminorest mit jeweils 1 bis 8 Kohlenstoffatomen, Aryl oder Aryloxy mit jeweils 6 bis 10 Kohlenstoffatomen oder Halogen mit einer Ordnungszahl von 9 bis 35 darstellen, und R² als zweiwertiger Rest einen Phenylen- oder Biphenylenrest, der unsubstituiert ist oder mit bis zu 4 nicht-aromatischen Kohlenwasserstoffresten mit 1 bis 8 Kohlenstoffatomen substituiert ist, oder einen Naphthylenrest, der unsubstituiert ist oder 1 bis 4 nicht-aromatische Kohlenwasserstoffreste mit 1 bis 8 Kohlenstoffatomen als Substituenten trägt, darstellt und R³ und R⁴ einen tert. Butylrest und R⁵ unabhängig voneinander Wasserstoff oder einen verzweigten oder unverzweigten Kohlenwasserstoffrest mit 1 bis 8 Kohlenstoffatomen, vorzugsweise mit 1 bis 4 Kohlenstoffatomen, darstellen.

Im einzelnen seien für R¹ und R² als einwertige Reste z.B. die verschiedenen Tolylreste, Xylylreste, Mesityl, 2,4,5-Trimethylphenyl, die verschiedenen tert.-Butylphenylreste, Di-tert.-butylphenylreste, 2,4,6-Tri-tert.-butylphenyl, 2,4-Di-tert.-octylphenyl, die verschiedenen Biphenyl-, Methylnaphthyl-, Dimethylnaphthyl- sowie Trimethylnaphthylreste genannt.

Für R² als zweiwertigen Rest seien beispielsweise genannt die verschiedenen Phenylenreste, wie 1,3- und 1,4-Phenylen, die verschiedenen Biphenylenreste, wie 2',3-, 2',4-, 3',3-, 3',4- und 4,4'-Biphenylen und die verschiedenen Naphthylenreste, wie 1,4- und 1,6-Naphthylen.

Als Rest R⁵ eignen sich z.B. nicht-aromatische Kohlenwasserstoffreste mit 1 bis 18 Kohlenstoffatomen, wie Alkyl oder Cycloalkyl, ferner aromatische Reste, die einschließlich aliphatischer Gruppen 6 bis 18 Kohlenstoffatome aufweisen, wobei nicht mehr als 10 Kohlenstoffatome Teil eines aromatischen Ringsystems sind. Bervorzugt enthalten die Reste R³, R⁴ und R⁵ 4 bis 12 und insbesondere 6 bis 10 Kohlenstoffatome. Im einzelnen eignen sich als nicht-aromatische Kohlenwasserstoffreste Alkyl wie Methyl, Äthyl, die verschiedenen Propyl-, Butyl-, Pentyl-, Hexyl-, Octyl-, Decyl-, Dodecyl-, Hexadecyl-, und Octadecylreste, und Cycloalkyl mit 5 bis 10 Kohlenstoffatomen wie Cyclopentyl, Cyclohexyl, Cycloheptyl und Cyclohexylmethyl (d.i. sowohl der hydrierte Benzylrest als auch der Methylcyclohexylrest); ferner seien genannt C₆-C₁₀-Aryl und Arylmethyl, wobei der Begriff Aryl jeweils Alkylaryl einschließt, der höchstens drei der unter R¹ genannten Substituenten trägt und, diese eingeschlossen, höchstens 14 Kohlenstoffatome hat.

Wenn der Rest R⁵ Alkyl bedeuten, sind tertiäre Alkylreste mit 4-10 Kohlenstoffatomen, wie tert.-Butyl, 2-Methyl-2-butyl, 2-Methyl-2-pentyl, 2-Äthyl-2-butyl besonders bevorzugt.

Beispiele für konkrete Verbindungen der Formel (I) sind:
- 2,4,6-Trimethylphenyl-phenylphosphinigsäure-2,4-di-tert.-butylphenylester
- 2,4,6-Trimethylphenyl-1-naphthylphosphinigsäure-2,4-di-tert.-butylphenylester
- Bis-(4-biphenyl)phosphinigsäure-2,4-di-tert.-butylphenylester
- Bis-(1-naphthyl)phosphinigsäure-2,4-di-tert.-butylphenylester
- 4,4'-Biphenylen-bis-(1-naphthyl-phosphinigsäure-2,4-di-tert.-butylphenylester)
- 2,4,6-Trimethylphenyl-4-methoxyphenylphosphinigsäure-2,4,6-tri-tert.-butylphenylester
- Bis-(2-methoxyphenyl)phosphinigsäure-2,4-di-tert.-butylphenylester
- 1,4-Phenylen-bis-(1-naphthyl-phosphinigsäure-2,4,6-tri-tert.-butylphenylester)
- 1,4-Naphthylen-bis(1-naphthyl-phosphinigsäure-2,4-di-tert.-butylphenylester)
- Bis-[4-(N,N-dimethylamino)phenyl]phosphinigsäure-2,4-di-tert.-butylphenylester)
- 1-Naphthyl-2-methoxyphenylphosphinigsäure-2,4-di-tert.-butylphenylester
- 1-Naphthyl-4-tert.-butylphenylphosphinigsäure-2,6-di-tert.-butylphenylester
- 4,4'-Biphenylen-bis-(2,4,6-trimethylphenylphosphinigsäure-2,4-di-tert.-butylphenylester)

Gegenstand der Erfindung ist auch ein Verfahren zur Herstellung der Phosphinigsäureester der Formel (I), worin R¹ und R² die oben angegebene Bedeutung haben, das dadurch gekennzeichnet ist, daß man
a) zunächst in erster Stufe ein Kohlenwasserstoffhalogenid R¹-Hal, worin R¹ die vorgenannte Bedeutung hat und dessen Halogen ein Atomgewicht von mindestens 35 hat, jedoch Chlor oder Brom und besonders bevorzugt Brom ist, unter Grignard-Bedingungen, zweckmäßig unter inniger Durchmischung, mit einer mindestens stöchiometrischen Menge feinteiligem Magnesium zur entsprechenden Grignardverbindung R¹-MgHal umsetzt, diese weiter in einer zweiten Stufe mit Phosphorigsäure-arylester-dichlorid umsetzt, in einer dritten Stufe ein Halogenid R²-(Hal)ₙ, worin R² und das Halogen die vorgenannte Bedeutung haben und n = 1 oder 2 ist, unter Grignard-Bedingungen, zweckmäßig unter inniger Durchmischung, mit einer mindestens stöchiometrischen Menge feinteiligem Magnesium zur entsprechenden Grignardverbindung R²-(MgHal)ₙ umsetzt und diese in einer vierten Stufe mit dem in der zweiten Stufe erhaltenen Phosphonigsäureester-halogenid der Formel (II) (siehe Patentanspruch 6) umsetzt oder
b) wenn R¹ = R² und n = 1 ist, zunächst in einer ersten Stufe ein Halogenid R¹-Hal, worin R¹ und das Halogen die vorgenannte Bedeutung haben, unter Grignard-Bedingungen, zweckmäßig unter inniger Durchmischung, mit einer mindestens stöchiometrischen Menge feinteiligem Magnesium zur entsprechenden Grignardverbindung R¹-MgHal umsetzt und in einer zweiten Stufe zwei Teile der Grignard-Verbindung mit einem Teil Phosphorigsäure-arylester-dichlorid umsetzt.

Von den als Ausgangsverbindungen eingesetzten Phosphorigsäure-arylesterdichloriden ist das Phosphorigsäure-2,4-di-tert.-butylphenylester-dichlorid besonders bevorzugt.

Für die 1. Stufe der Verfahrensvariante a) wird als Kohlenwasserstoffhalogenid R¹-Hal bevorzugt ein solches eingesetzt, bei dem R¹ ein mit mindestens einem der genannten Substituenten substituierter Phenylrest ist, wobei sich der Substituent bevorzugt in 2-Position befindet, oder ein gegebenenfalls substituierter Naphthylrest ist.

Die jeweils erste und gegebenenfalls dritte Stufe des erfindungsgemäßen Verfahrens, die man an sich in jeder üblichen Weise durchführen kann, werden bevorzugt in einem aprotischen, organischen Lösungsmittel wie einem Äther, z.B. Diäthyl-, Dipropyl- oder Diisopropyläther, Äthylenglycoldimethyl- oder -äthyläther, Diäthylenglycoldimethyl- oder -äthyläther, Methyl-tert.-butyläther, Dioxan oder Tetrahydrofuran durchgeführt.

Da die Grignard-Verbindungen hydrolyse- und oxidationsempfindlich sind, kann es zweckmäßig sein, unter Schutzgasatmosphäre zu arbeiten. Ein solches Vorgehen ist jedoch für das Gelingen der Reaktion keineswegs zwingend. Als Schutzgas geeignet sind Stickstoff und Argon. Die Reaktionstemperatur liegt im allgemeinen zwischen 20 und 125°C, bevorzugt jedoch zwischen 30 und 70°C. Es kann vorteilhaft sein, während der Grignardierung für eine gute Verwirbelung zu sorgen, beispielsweise durch Einwirkung von Ultraschall.

Zur Herstellung der Zwischenprodukte der Formel (II) wird in der zweiten Stufe der Verfahrensvariante a) die Lösung bzw. Suspension des Grignard-Reagenzes zu einer Lösung von Phosphorigsäure-2,4-di-tert.-butylphenylester-dichlorid, vorteilhaft bei einer Temperatur unterhalb 0°C, unter lebhafter Durchmischung zudosiert.

Zur Herstellung der Verbindungen (I) mit R¹ = R² (2. Stufe der Variante b) und zur Umsetzung der Zwischenprodukte (II) mit Grignard-Verbindungen (4. Stufe der Variante a) können die Reaktionspartner in beliebiger Weise zusammengegeben werden. Vorzugsweise wird die Lösung bzw. Suspension der Grignard-Verbindung zu einer Lösung des Phosphorigsäure-2,4-di-tert.-butylphenylester-dichlorids, vorteilhaft bei einer Temperatur unterhalb 0°C, unter lebhafter Durchmischung zudosiert.

Für die zweite und vierte Stufe der Variante a sowie für die zweite Stufe der Variante b kommen als Verdünnungsmittel inerte, aprotische Lösungsmittel, z.B. eine aliphatische Kohlenwasserstofffraktion, Hexan, Cyclohexan, Methylcyclohexan, Toluol, Xylole oder einer der o.g. Äther bzw. entsprechende Gemische in Frage. Die Reaktionstemperatur liegt bei diesen Stufen im allgemeinen zwischen -30 und +50°C, vorzugsweise aber zwischen -20 und +20°C. Die Umsetzung verläuft in der Regel exotherm; dementsprechend kann es zweckmäßig sein, den Reaktionsverlauf durch Kühlung zu steuern. Die günstigsten Ergebnisse werden erzielt, wenn man die Reaktionspartner in den stöchiometrischen Mengen einsetzt. Es ist jedoch auch möglich, einen Reaktionspartner im Überschuß einzusetzen; im allgemeinen sind damit aber keine besonderen Vorteile verbunden. Zweckmäßig wird gerührt, bis die Umsetzung vollständig ist, und anschließend vom ausgefallenen Magnesiumhalogenid abgetrennt. Die Lösungsmittel können aus dem Filtrat in üblicher Weise, vorteilhaft destillativ, insbesondere unter vermindertem Druck, entfernt werden.

Die Produkte (I) lassen sich nach beliebigen Verfahren, bevorzugt jedoch durch Kristallisation, aus den Rohprodukten aussondern.

Bei der Synthese von Phosphinigsäureestern durch Umsetzung von Phosphorigsäure-ester-dihalogeniden mit Organomagnesiumhalogeniden läuft als ausbeutevermindernde Nebenreaktion der Austausch des OR-Restes durch die Grignardverbindung ab, so daß selbst in den günstigsten Fällen die erzielten Ausbeuten 60% nicht übersteigen [Houben-Weyl: "Methoden der organischen Chemie", 12/1, S. 210 (1963)].

Darüberhinaus bestand in der Literatur ein Vorurteil dahingehend, daß die Umsetzung von Phosphorigsäure-ester-dihalogeniden mit Organo-magnesiumbromiden zunächst immer zu unlöslichen Komplexverbindungen führt, die erst durch Zugabe weiterer Hilfsstoffe (z.B. 4 Mol Pyridin) zerlegt werden müssen, um eine Isolierung der gewünschten Phosphinigsäureester zu ermöglichen (Houben-Weyl, l.c.). Daher ist es besonders überraschend, daß das Verfahren der vorliegenden Erfindung, speziell im Falle, daß R³ und R⁴ tert.-Butyl und R⁵ Wasserstoff sind, die Phosphinigsäureester (I) in hoher Ausbeute und Reinheit zugänglich macht, ohne daß der Einsatz von Dekomplexierungsmitteln notwendig ist.

Die Herstellung der als Vorprodukt benötigten Phosphorigsäure-arylester-dichloride ist beispielsweise in Houben-Weyl: "Methoden der organischen Chemie", Bd. E1, S. 353-354 (1982) beschrieben.

Gegenstand der Erfindung ist schließlich die Verwendung von Verbindungen der Formel (I) für sich oder in Kombination mit einem phenolischen Antioxydans zur Stabilisierung von Kunststoffen, vorzugsweise Polymerisationskunststoffen wie Polypropylen. Für diese Anwendung ist vielfach die Reinheit der anfallenden rohen Reaktionsprodukte ausreichend. Eine Isolierung in reiner Form ist dann nicht erforderlich.

Die vorliegende Erfindung betrifft somit auch eine Kunststoff-Formmasse, enthaltend einen thermoplastischen oder duroplastischen Kunststoff und ein Diarylphosphinigsäure-arylester der Formel (I) im Verhältnis von (90 bis 99,99): (0,01 bis 10). Dabei wird von den Verbindungen der Formel (I) im allgemeinen nur eine Verbindung eingesetzt, es kommen jedoch auch Gemische in Frage.

Die erfindungsgemäße Kunststoff-Formmasse enthält ein thermoplastisches oder duroplastisches organisches Polymer, beispielsweise eines der nachstehend aufgeführten:
1. Polymere von Mono- und Diolefinen, beispielsweise Polyäthylen hoher, mittlerer oder niederer Dichte (das gegebenenfalls vernetzt sein kann), Polypropylen, Polyisobutylen, Polybuten-1, Polymethylpenten-1, Polyisopren oder Polybutadien sowie Polymerisate von Cycloolefinen wie Cyclopenten oder Norbornen.
2. Mischungen der unter 1) genannten Polymeren, z.B. von Polypropylen mit Polyäthylen oder mit Polyisobutylen.
3. Copolymere von Mono- und Diolefinen untereinander oder mit anderen Vinylmonomeren, wie Äthylen-Propylen-Copolymere, Propylen-Buten-1-Copolymere, Propylen-Isobutylen-Copolymere, Äthylen-Buten-1-Copolymere, Propylen-Butadien-Copolymere, Isobutylen-Isopren-Copolymere, Äthylen-Alkylacrylat-Copolymere, Äthylen-Alkylmethacrylat-Copolymere-, Äthylen-Vinylacetat-Copolymere oder Äthylen-Acrylsäure-Copolymere und deren Salze (Ionomere), sowie Terpolymere von Äthylen mit Propylen und einem Dien, wie Hexadien, Dicyclopentadien oder Äthylidennorbornen.
4. Polystyrol.
5. Copolymere von Styrol oder α-Methylstyrol mit Dienen oder Acrylderivaten, wie Styrol-Butadien, Styrol-Maleinsäureanhydrid, Styrol-Acrylnitril, Styrol-Äthylmethacrylat, Styrol-Butadien-Äthylacrylat, Styrol-Acrylnitril-Methylacrylat; Mischungen von hoher Schlagzähigkeit aus Styrol-Copolymeren und einem anderen Polymeren wie einem Polyacrylat, einem Dien-Polymeren oder einem Äthylen-Propylen-Dien-Terpolymeren; sowie Block-Copolymere des Styrols, wie Styrol-Butadien-Styrol, Styrol-Isopren-Styrol, Styrol-Äthylen/Butylen-Styrol oder Styrol-Äthylen/Propylen-Styrol.
6. Pfropfcopolymere von Styrol, wie Styrol auf Polybutadien, Styrol und Acrylnitril auf Polybutadien (ABS), Styrol und Maleinsäureanhydrid auf Polybutadien, Styrol und Alkylacrylate bzw. Alkylmethacrylate auf Polybutadien, Styrol und Acrylnitril auf Äthylen-Propylen-Dien-Terpolymeren, Styrol und Acrylnitril auf Polyalkylacrylaten oder Polyalkylmethacrylaten, Styrol und Acrylnitril auf Acrylat-Butadien Copolymeren, sowie deren Mischungen mit den unter 5) genannten Copolymere, die z.B. als sogenannte ABS-, MBS-, ASA- oder AES-Polymere bekannt sind.
7. Halogenhaltige Polymere, wie Polychloropren, Chlorkautschuk, chloriertes (CPE) oder chlorsulfoniertes Polyäthylen, Epichlorhydrin-homo- und copolymere, insbesondere Polymere aus halogenhaltigen Vinylverbindungen, wie Polyvinylchlorid (PVC), Polyvinylidenchlorid (PVDC), Polyvinylfluorid, Polyvinylidenfluorid (PVDF); sowie deren Copolymere wie Vinylchlorid-Vinylidenchlorid, Vinylchlorid-Vinylacetat oder Vinylidenchlorid-Vinylacetat.
8. Polymere, die sich von α,β-ungesättigten Carbonsäuren und deren Derivaten ableiten, wie Polyacrylate und Polymethacrylate, Polyacrylamide und Polyacrylnitrile.
9. Copolymere der unter 8) genannten Monomeren untereinander oder mit anderen ungesättigten Monomeren, wie Acrylnitril-Butadien-Copolymere, Acrylnitril-Alkylacrylat-Copolymere, Acrylnitril-Alkoxyacrylat-Copolymere, Acrylnitril-Vinylhalogenid-Copolymere oder Acrylnitril-Alkylmethacrylat-Butadien-Terpolymere.
10. Polymere, die sich von ungesättigten Alkohole und Aminen bzw. deren Acylderivaten oder Acetalen ableiten, wie Polyvinylalkohol, Polyvinylacetat, -stearat, -benzoat, -maleat, Polyvinylbutyral, Polyallylnaphthalat, Polyallylmelamin.
11. Homo- und Copolymere von cyclischen Äthern, wie Polyäthylenglykole, Polyäthylenoxyd, Polypropylenoxyd oder deren Copolymere mit Bisglycidyläthern.
12. Polyacetale, wie Polyoxymethylen (POM), sowie solche Polyoxymethylene, die Comonomere wie Äthylenoxy enthalten.
13. Polyphenylenoxyde und -sulfide.
14. Polyurethane (PUR), die sich von Polyäthern, Polyestern und Polybutadienen mit endständigen Hydroxylgruppen einerseits und aliphatischen oder aromatischen Polyisocyanaten andererseits ableiten sowie deren Vorprodukte (Polyisocyanate-Polyole-Präpolymere).
15. Polyamide und Copolyamide, die sich von Diaminen und Dicarbonsäuren und/oder von Aminocarbonsäuren oder den entsprechenden Lactamen ableiten, wie Polyamid-4, Polyamid-6, Polyamid-6/6, Polyamid-6/10, Polyamid-11, Polyamid-12, Poly-2,4,4-trimethylhexamethylenterephthalamid, Poly-m-phenylenisonaphthalamid, sowie deren Copolymere mit Polyäthern wie mit Polyäthylenglykol, Polypropylenglykol oder Polytetramethylenglykol.
16. Polyharnstoffe, Polyimide und Polyamid-imide.
17. Polyester, die sich von Dicarbonsäuren und Diolen und/oder von Hydroxycarbonsäuren oder den entsprechenden Lactonen ableiten, wie Polyäthylenterephthalat, Polybutylenterephthalat (PBTP), Poly-1,4-dimethylolcyclohexan-terephthalat, Poly-(2,2-bis(4-hydroxyphenyl)-propan)-terephthalat, Polyhydroxybenzoate, sowie Block-Polyätherester, die sich von Polyäthylen mit Hydroxyendgruppen, Dialkoholen und Dicarbonsäuren ableiten.
18. Polycarbonate (PC).
19. Polysulfone und Polyäthersulfone.
20. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.
21. Trocknende und nicht trocknende Alkydharze.
22. Ungesättigte Polyesterharze, die sich von Copolyestern gesättigter und ungesättigter Dicarbonsäuren mit mehrwertigen Alkoholen, sowie Vinylverbindungen als Vernetzungsmittel, ableiten, wie auch deren halogenhaltige, schwerbrennbare Modifikationen.
23. Vernetzbare Acrylharze, die sich von substituierten Acrylsäureestern ableiten wie von Epoxyacrylaten, Urethan-acrylaten oder Polyester-acrylaten.
24. Alkydharze, Polyesterharze und Acrylatharze, die mit Melaminharzen, Harnstoffharzen, Polyisocyanaten oder Epoxidharzen vernetzt sind.
25. Vernetzte Epoxidharze, die sich von Polyepoxiden ableiten, z.B. von Bisglycidyläthern oder von cycloaliphatischen Diepoxiden.
26. Natürliche Polymere, wie Cellulose, Naturkautschuk, Gelatine sowie deren polymerhomolog chemisch abgewandelte Derivate, wie Celluloseacetate,-propionate und -butyrate, bzw. die Celluloseäther, wie Methylcellulose.
27. Mischungen der oben erwähnten Polymeren, wie beispielsweise PP/EPDM, Polyamid-6/EPDM oder ABS, PVC/EVA, PVC/ABS, PVC/MBS, PC/ABS, PBTP/ABS, PC/ASA, PC/PBT, PVC/CPE, PVD/Acrylat, POM/thermoplastisches PUR, POM/Acrylat, POM/MBS, Polyphenylenäther/hochschlagfestes (High Impact Strength) Polystyrol (PPE/HIPS), PPE/Polyamid-6.6 und Copolymere, PA/HDPE, PA/PP, PA/PPE.
28. Natürlich vorkommende und synthetische organische Stoffe, welche reine Monomere oder Mischungen von Monomeren sind, wie Mineralöle, tierische und pflanzliche Fette, Öle und Wachse, oder Öle, Fette und Wachse auf Basis synthetischer Ester oder Mischungen dieser Stoffe.
29. Wäßrige Dispersionen von Natur- und Synthesekautschuk.

Das Polymere ist vorzugsweise ein Polyolefin, insbesondere Polypropylen. Der Anteil der Polymeren an der erfindungsgemäßen Formmasse beträgt 90 bis 99,99, vorzugsweise 98 bis 99,98 Gew.-%.

Als Stabilisator enthält die Formmasse einen Diarylphosphinigsäure-arylester der Formel (I) und gegebenenfalls ein phenolisches Antioxidans.

Das phenolische Antioxidans ist z.B. ein Ester der 3,3-Bis-(3'-butyl-4'-hydroxyphenyl)-butansäure der Formel (III) 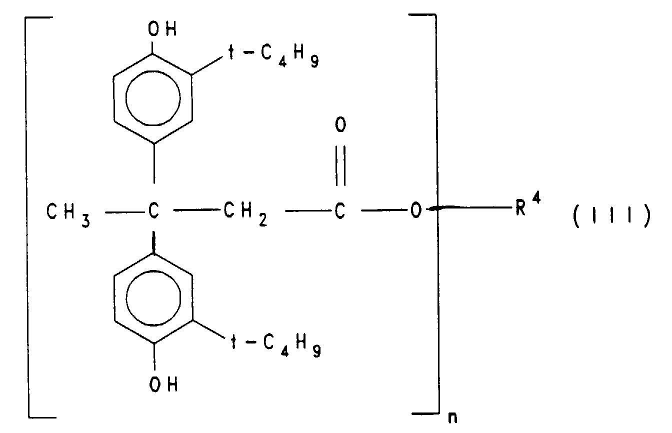 worin n 1 oder 2 ist und R⁴ einen C₁-C₁₈-Alkylrest bedeutet, wenn n 1 ist, und einen C₁-C₁₂-Alkylenrest, wenn n 2 ist. Vorzugsweise ist R⁴ ein C₂-C₄-Alkylenrest, insbesondere ein C₂-Alkylenrest.

Das phenolische Antioxidans kann jedoch auch ein Ester der β-(3,5-Di-t-butyl-4-hydroxy-phenyl)-propionsäure der Formel (IV) sein, 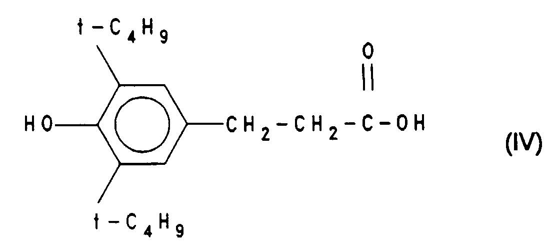 wobei die Alkoholkomponente ein ein- bis vierwertiger Alkohol, wie Methanol, Octadecanol, 1,6-Hexandiol, Neopentylglykol, Diäthylenglykol, Triäthylenglykol, Pentaerythrit, Tris-hydroxyäthyl-isocyanurat, Thiodiäthylenglykol oder Dihydroxyäthyl-oxalsäurediamid ist.

Die neuen Stabilisatoren werden nach allgemein üblichen Methoden in die organischen Polymeren eingearbeitet. Die Einarbeitung kann beispielsweise durch Zugabe der Stabilisatoren vor oder während der Polymerisation, Polykondensation oder Polyaddition oder durch Einmischen der Verbindungen und gegebenenfalls weiterer Additive in die Schmelze vor oder während der Formgebung erfolgen. Auch durch Aufbringen der gelösten oder dispergierten Verbindungen auf das Polymere direkt oder Einmischen in eine Lösung, Suspension oder Emulsion des Polymeren, gegebenenfalls unter nachträglichem Verdunstenlassen des Lösemittels kann die Einarbeitung erfolgen. Die den Polymeren zuzusetzende Menge liegt bei 0,01 bis 10, vorzugsweise 0,025 bis 5, insbesondere 0,05 bis 1,0 Gew.-%, bezogen auf das zu stabilisierende Material.

Die neuen Verbindungen können auch in Form eines Masterbatches, der diese Verbindungen beispielsweise in einer Konzentration von 1 bis 50, vorzugsweise 2,5 bis 20 Gew.-% enthält, den zu stabilisierenden Polymeren zugesetzt werden.

Zusätzlich kann die erfindungsgemäße Formmasse noch andere Antioxidantien enthalten wie
1. Alkylierte Monophenole, z.B. 2,6-Di-t-butyl-4-methylphenol, -4-äthylphenol, -4-n-butylphenol, -4-i-butylphenol, 2-t-Butyl-4,6-dimethylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-t-butyl-4-methoxymethylphenol;
2. Alkylierte Hydrochinone, wie 2,5-Di-t-butyl- und 2,5-Di-t-amyl-hydrochinon, 2,6-Di-t-butyl-4-methoxyphenol und 2,6-Diphenyl-4-octadecylphenol;
3. Hydroxylierte Thiodiphenyläther, wie 2,2'-Thio-bis-(6-t-butyl-4-methylphenol) und -(4-octylphenol) sowie 4,4'-Thio-bis-(6-t-butyl-3-methylphenol) und -(6-t-butyl-2-methylphenol);
4. Alkyliden-Bisphenole, wie 2,2'-Methylen-bis-(6-t-butyl-4-methylphenol), -(6-t-butyl-4-äthylphenol), -[4-methyl-6-(α-methylcydohexyl)-phenol], -(4-methyl-6-cyclohexylphenol), -(6-nonyl-4-methylphenol), -(4,6-di-t-butylphenol), -[6-(α-methylbenzyl)-4-nonylphenol], -[6-(α,α-dimethylbenzyl)-4-nonylphenol], 4,4'-Methylen-bis-(2,6-di-t-butylphenol), -(6-t-butylphenol) und -(6-t-butyl-4-isobutylphenol), 1,1-Bis- und 1,1,3-Tris-(5-t-butyl-4-hydroxy-2-methylphenyl)-butan, 2,6-Di-(3-t-butyl-5-methyl-2-hydroxybenzyl)-4-methylphenol, 1,1-Bis(5-t-butyl-4-hydroxy-2-methylphenyl)-3-n-dodecylmercaptobutan, Di-(3-t-butyl-4-hydroxy-5-methylphenyl)-dicyclo-pentadien;
5. Benzylverbindungen, wie Di-[2-(3'-t-butyl-2'-hydroxy-5'-methyl-benzyl)-6-t-butyl-4-methyl-phenyl] -terephthalat, 1,3, 5-Tri-(3,5-di-t-butyl-4-hydroxybenzyl)-2,4,6-trimethylbenzol, Di-(3,5-di-t-butyl-4-hydroxybenzyl)-sulfid, 3,5-Di-t-butyl-4-hydroxybenzyl-mercaptoessigsäure-isooctylester, Bis-(4-t-butyl-3-hydroxy-2,6-dimethylbenzyl)-dithiol-terephthalat, 1,3,5-Tris-(3,5-di-t-butyl-4-hydroxybenzyl)-iso-cyanurat, 1,3,5-Tris-(4-t-butyl-3-hydroxy-2,6-dimethylbenzyl)-isocyanurat, 3,5-Di-t-butyl-4-hydroxybenzyl-phosphonsäure-diocta-decylester und das Calciumsalz des 3,5-Di-t-butyl-4-hydroxybenzyl-phosphonsäure-monoäthylesters;
6. Acylaminophenole, wie 4-Hydroxy-laurin- und -stearinsäureanilid, 2,4-Bis-octylmercapto-6-(3,5-di-t-butyl-4-hydroxy-anilino)-s-triazin und N-(3,5-di-t-butyl-4-hydroxyphenyl)carbaminsäure-octylester;
7. Ester der β-(5-t-butyl-4-hydroxy-3-methylphenyl)-propionsäure mit ein- oder mehrwertigen Alkoholen, wie Methanol, Octadecanol, 1,6-Hexandiol,Neopentylglykol, Diäthylenglykol, Triäthylenglykol, Pentaerythrit, Tris-hydroxyäthyl-isocyanurat, Thiodiäthylenglykol oder Di-hydroxyäthyloxalsäurediamid;
8. Amide der β-(3,5-Di-t-butyl-4-hydroxyphenyl)-propionsäure, wie N,N'-Di-(3,5-di-t-butyl-4- hydroxyphenylpropionyl)-trimethylendiamin, -hexamethylendiamin und-hydrazin.

Daneben kann die erfindungsgemäße Formmasse noch weitere Additive enthalten, wie
1. UV-Absorber und Lichtschutzmittel, z.B.
   1.1 2-(2'-Hydroxymethyl)-benztriazole, wie das 5'-Methyl-, 3',5'-Di-t-butyl-, 5'-t-Butyl-, 5'-(1,1,3,3-Tetramethylbutyl)-, 5-Chlor-3',5'-di-t-butyl-, 5-Chlor-3'-t-butyl-5'-methyl-, 3'-sec.-Butyl-5'-t-butyl-, 4'-Octoxy-, 3',5'-Di-t-amyl-, 3',5'-Bis-(α, α-dimethylbenzyl)-Derivat;
   1.2 2-Hydroxybenzophenone, wie das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat;
   1.3 Ester von gegebenenfalls substituierten Benzoesäuren, wie Phenylsalicylat, 4-t-Butyl-phenylsalicylat, Octylphenylsalicylat, Dibenzoylresorcin, Bis-(4-t-butylbenzoyl)-resorcin, Benzylresorcin, 3,5-Di-t-butyl-4-hydroxy-benzoesäure-2,4-di-t-butylphenylester, 3,5-Di-t-butyl-4-hydroxybenzoesäurehexadecylester;
   1.4 Acrylate, wie α-Cyan-β,β-diphenylacrylsäure-äthylester bzw. -iso-octylester, α-Carbomethoxy- und α-Carbomethoxy-p-methoxy-zimtsäuremethylester, α-Cyano-β-methyl-p-methoxy-zimtsäuremethylester bzw. -butylester, N-(β-Carbomethoxy-β-cyano-vinyl)-2-methyl-indolin;
   1.5 Nickelverbindungen, wie Nickelkomplexe des 2,2'-Thio-bis-[4-(1,1,3,3-tetramethyl-butyl)-phenols], wie der 1:1- oder 1:2-Komplex, gegebenenfalls mit zusätzlichen Liganden wie n-Butyl-amin, Triäthanolamin oder N-Cyclohexyldiäthanolamin, Nickelalkyl-dithiocarbamate, Nickelsalze von 4-Hydroxy-3,5-di-t-butyl-benzylphosphonsäure-mono-alkylestern wie vom Methyl- oder Äthylester, Nickelkomplexe von Ketoximen wie von 2-Hydroxy-4-methylphenyl-undecylketonoxim, Nickelsalze der 2-Hydroxy-4-alkoxybenzophenone, Nickelkomplexe des 1-Phenyl-4-lauroyl-5-hydroxy-pyrazols, gegebenenfalls mit zusätzlichen Liganden;
   1.6 Sterisch gehinderte Amine, wie
      1.6.1. Bis-(2,2,6,6-tetramethylpiperidyl)-sebacat, -glutarat und -succinat, Bis-(1,2,2,6,6-pentamethylpiperidyl)sebacat, -glutarat und -succinat, 4-Stearoyloxy- und 4-Stearoyloxy-2,2,6,6-tetramethyl-piperidin, 4-Stearyloxy- und 4-Stearoyloxy-1,2,2,6,6-pentamethyl-piperidin, 2,2,6,6-Tetramethylpiperidylbehenat, 1,2,2,6,6-Pentamethylpiperidinylbehenat, 2,2,4,4-Tetramethyl-7-oxa-3,20-diazadispiro-[5.1.11.2]-heneicosan-21-on, 2,2,3,4,4-Penta-methyl-7-oxa-3,20-diaza-dispiro-[5.1.11.2]-heneicosan-21-on, 2,2,4,4-Tetramethyl-3-acetyl-7-oxa-3,20-diaza-dispiro-[5.1.11.2]-heneicosan-21-on, 2,2,4,4-Tetramethyl-7-oxa-3,20-diaza-20-(β-lauryl-oxycarbonylethyl)-21-oxo-dispiro-[5.1.11.2]-heneicosan, 2,2,3,4,4-Pentamethyl-7-oxa-3,20-diaza-20-(β-lauryloxycarbonylethyl)-21-oxo-dispiro-[5.1.11.2]-heneicosan, 2,2,4,4,-Tetramethyl-3-acetyl-7-oxa-3,20-diaza-20-(β-lauryloxycarbonyl-äthyl)-21-oxodispiro-[5.1.11.2]-heneicosan, 1,1',3,3',5,5'-Hexahydro-2,2',4',4,6,6'-hexaaza-2,2',6,6'-bismethano-7,8-dioxo-4,4'-bis-(1,2,2,6,6-pentamethyl-4-piperidyl)-biphenyl, N,N',N",N"'-tetrakis-{2,4-bis-[N-(2,2,6,6-tetramethyl-4-piperidyl)-butylamino]-1,3,5-triazin-6-yl}-4,7-diazadecan-1,10-diamin, N,N',N",N"'-tetrakis-{2,4-bis-[N-(1,2,2,6,6-pentamethyl-4-piperidyl)-butylamino] -1,3,5-triazin-6-yl}-4,7-diazadecan-1,10-diamin, N,N',N"',N"'-tetrakis-{2,4-bis-[N-(2,2,6,6-tetramethyl-4-piperidyl)-methoxypropylamino]-1,3,5-triazin-6-yl}-4,7-diazadecan-1,10-diamin, N,N',N",N"'-tetrakis-{2,4-bis[N-(1,2,2,6,6-pentamethyl-4-piperidyl)-methoxypropylamino]-1 ,3,5-triazin-6-yl}-4,7-diazadecan-1,10-diamin, Bis-(1,2,2,6,6-pentamethyl-piperidyl)-n-butyl-3,5-di-tert.-butyl-4-hydroxy-benzylmalonat, Tris-(2,2,6,6-tetramethyl-4-piperidyl)-nitrilotriacetat, Tetrakis-(2,2,6,6-tetramethyl-4-piperidyl)-1,2,3,4-butantetracarbonsäure, 1,1'-(1,2-Ethandiyl)-bis-(3,3,5,5-tetramethylpiperazinon).
      1.6.2. Poly-N,N'-bis-(2,2,6,6-tetramethyl-4-piperidyl)-1,8-diazadecylen, Kondensationsprodukt aus 1-(2-Hydroxyethyl)-2,2,6,6-tetramethyl-4-hydroxypiperidin und Bernsteinsäure, Kondensationsprodukt aus N,N'-bis-(2,2,6,6-tetramethyl-4-piperidyl)-hexamethylendiamin und 4-tert.-Octylamino-2,6-dichlor-1,3,5-s-triazin, Kondensationsprodukt aus N,N'-bis-(2,2,6,6-tetramethyl-4-piperidyl)-hexamethylendiamin und 4-Morpholino-2,6-dichlor-1,3,5-triazin.
      1.6.3. N-Oxyalkylderivate der unter 1.6.1. und 1.6.2.genannten 2,2,6,6-Tetramethylpiperidinderivate, wobei das Alkyl C₁-C₁₈-Alkyl ist.

      Besonders vorteilhaft erweist sich dabei in vielen Fällen eine Kombination der erfindungsgemäßen Verbindungen. 1.7 Oxalsäurediamide, wie 4,4'-Di-octyloxy-oxanilid, 2,2'-Di-octyloxy-5,5'-di-t-butyl-oxanilid, 2,2'-Didodecyloxy-5,5'-di-t-butyloxanilid, 2-Äthoxy-2'-äthyloxanilid, N,N'-Bis-(3-dimethylaminopropyl)-oxalamid, 2-Äthoxy-5-t-butyl-2'-äthyloxanilid und dessen Gemisch mit 2-Äthoxy-2'-äthyl-5,4-di-t-butyl-oxanilid, Gemische von o- und p-Methoxy- und -Äthoxy-di-substituierten Oxaniliden;
2. Metalldesaktivatoren, wie N,N'-Diphenyloxalsäureadiamid, N-Salicylal-N'-salicyloyl-hydrazin, N,N'-Bis-salicyloyl-hydrazin, N,N'-Bis-(3,5-di-t-butyl-4-hydroxyphenylpropionyl)-hydrazin, 3-Salicyloyl-amino-1,2,3-triazol, Bis-benzyliden-oxalsäuredihydrazid;
3. Phosphite und Phosphonite, beispielsweise Triphenylphosphit, Diphenylalkylphosphite, Phenyl-dialkylphosphite, Trisnonylphenylphosphit, Trilauryl-phosphit, Trioctadecylphosphit, Distearyl-pentaerythrityl-diphosphit, Tris(2,4-di-t-butylphenyl)phosphit, Diisodecyl-pentaerythrityl-diphosphit, Bis-(2,4-di-t-butylphenyl)-pentaerythrityl-diphosphit, Tristearyl-sorbityltriphosphit, Tetrakis-(2,4-di-t-butylphenyl)-4,4'-biphenylen-diphosphonit, 3,9-Bis-(2,4-di-t-butyl-phenoxy)-2,4,8,10-tetraoxa-3,9-diphosphaspiro(5.5)-undecan, Tris(2-t-butyl-4-thio(2'-methenyl-4'-hydroxy-5'-t-butyl)-phenyl-5-methenyl)-phenylphosphit.
4. Peroxidzerstörende Verbindungen, wie Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-alkyldithiocarbamate, Dioctadecyldisulfid, Dioctadecylmonosulfid, Pentaerythrittetrakis-(β-dodecyl-mercapto)-propionat;
5. Basische Co-Stabilisatoren, wie Melamin, Polyvinylpyrrolidon, Dicyandiamid, Triallylcyanurat, Harnstoff-Derivate, Hydrazin-Derivate, Amine, Polyamine, Polyurethane, Alkali- und Erdalkalisalze höherer Fettsäuren oder Phenolate, beispielsweise Ca-, Zn- und Mg-Stearat, Na-Ricinoleat, K-Palmitat, Antimon- oder Zinnbrenzcatechinat, Hydroxide und Oxide von Erdalkalimetallen oder des Aluminiums, beispielsweise CaO, MgO, ZnO;
6. Nukleierungsmittel, wie 4-t-Butylbenzoesäure, Adipinsäure, Diphenylessigsäure, Dibenzylidensorbit;
7. Füllstoffe und Verstärkungsmittel, wie Calciumcarbonat, Silikate, Glasfasern, Asbest, Talk, Kaolin, Glimmer, Bariumsulfat, Metalloxide und -hydroxide, Ruß, Graphit;
8. Sonstige Zusätze, wie Weichmacher, Gleitmittel, Emulgatoren, Pigmente, optische Aufheller, Flammschutzmittel, Antistatika, Treibmittel.

Die verschiedenen zusätzlichen Additive der vorgenannten Gruppen 1 bis 6 werden den zu stabilisierenden Polymeren in einer Menge von 0,01 bis 10, vorzugsweise 0,02 bis 5 Gew.-%, bezogen auf das Gesamtgewicht der Formmasse, zugesetzt. Der Mengenanteil der Additive der Gruppen 7 und 8 beträgt im allgemeinen 1 bis 80, vorzugsweise 10 bis 50 Gew.-%, bezogen auf die gesamte Formmasse. Die erfindungsgemäß stabilisierten organischen Polymeren können in verschiedener Form angewendet werden, z.B. als Folien, Fasern, Bändchen, Profile oder als Bindemittel für Lacke, Klebstoffe oder Kitte.

### 1. Beispiele für die Herstellung der Diarylphosphinigsäure-arylester

### Allgemeine Vorschrift für Verbindungen der Formel (I)

### Verfahrensvariante a:

Unter Stickstoffatmosphäre und Feuchtigkeitsausschluß wurde aus 150 mmol Organobromverbindung R¹-Br und 150 mmol ( = 3,65 g) Magnesiumspänen in 90 ml Tetrahydrofuran die entsprechende Grignardverbindung R¹-MgBr hergestellt. Anschließend wurde die erhaltene Lösung bzw. Suspension der metallorganischen Verbindung innerhalb von 30 bis 40 Minuten unter lebhaftem Rühren bei einer Innentemperatur von -20 bis -10°C zu der Lösung von 150 mmol ( = 46,1 g) Phosphorigsäure-2,4-di-tert.-butylphenylester-dichlorid in 120 ml Tetrahydrofuran/n-Heptan (1:1) zudosiert. Dann ließ man die Reaktionsmischung auf Raumtemperatur erwärmen und rührte zur Vervollständigung der Reaktion noch 2,5 Stunden. Unter Stickstoffatmosphäre und Feuchtigkeitsausschuß wurde aus 150 mmol Organobromverbindung R² -(Br)ₙ und 150 mmol (= 3,65 g) Magnesiumspänen in 90 ml Tetrahydrofuran die entsprechende Grignardverbindung R²-(MgBr)ₙ hergestellt. Anschließend wurde die erhaltene Lösung bzw. Suspension der metallorganischen Verbindung R²-(MgBr)ₙ innerhalb von 30 bis 40 Minuten unter lebhaftem Rühren bei einer Innentemperatur von -20 bis - 10°C zur Lösung des zuvor hergestellten Arylphosphonigsäure-2,4-di-tert.-butylphenyl-ester-chlorids zudosiert. Dann ließ man die Reaktionsmischung auf Raumtemperatur erwärmen und rührte zur Vervollständigung der Reaktion noch 2,5 Stunden. Nach Filtration vom ausgefallenen Magnesiumsalz, das mit ca. 50 ml Petroläther nachgewaschen wurde, wurde das Lösungsmittel zunächst im Vakuum der Wasserstrahlpumpe und dann im Hochvakuum abdestilliert. Der verbliebene farblose oder beige Rückstand wurde pulverisiert und im Hochvakuum getrocknet.

### Verfahrensvariante b:

Unter Stickstoffatmosphäre und Feuchtigkeitsausschluß wurde aus 300 mmol Organobromverbindung und 300 mmol ( = 7,3 g) Magnesiumspänen in 180 ml Tetrahydrofuran die entsprechende Grignardverbindung hergestellt. Anschließend wurde die erhaltene Lösung bzw. Suspension der metallorganischen Verbindung innerhalb von 30 bis 40 Minuten unter lebhaftem Rühren bei einer Innentemperatur von -20 bis -10°C zu der Lösung von 150 mmol ( = 46,1 g) Phosphorigsäure-2,4-di-tert-butylphenylester-dichlorid in 120 ml Tetrahydrofuran/n-Heptan (1:1) zudosiert. Dann ließ man die Reaktionsmischung auf Raumtemperatur erwärmen und rührte zur Vervollständigung der Reaktion noch 2,5 Stunden. Nach Filtration vom ausgefallenen Magnesiumsalz, das mit ca. 50 ml Petroläther nachgewaschen wurde, wurde das Lösungsmittel zunächst im Vakuum der Wasserstrahlpumpe und dann im Hochvakuum abdestilliert. Der verbliebene farblose oder beige Rückstand wurde pulverisiert und im Hochvakuum getrocknet.

Der Produktgehalt der Rohmaterialien wurde jeweils durch ³¹P-NMR Spektroskopie ermittelt und lag im allgemeinen zwischen 70 und 95% (vom Gesamt-P). In den angegebenen Fällen wurde zur Charakterisierung des Produktes aus geeigneten Lösungsmitteln kristallisiert.

1. 2,4,6-Trimethylphenyl-phenylphosphinigsäure-2,4-di-tert.-butylphenylester (Variante a): Ausgehend von 29,9 g 1-Brom-2,4,6-trimethylbenzol und 23,6 g Brombenzol erhielt man 64 g farblose Kristalle vom Schmelzpunkt 126°C und einem Gehalt von 95% an vorstehender Verbindung [³¹P-NMR: δ_{CDCl₃} = 111,1 ppm]. Aus Aceton kristallisierten farblose Kristalle vom Schmelzpunkt 128-130°C.

| | | | |
|---|---|---|---|
| C₂₉H₃₇OP | Ber.: 80,52% | C, 8,62% | H, 7,16% P |
| (432,59) | Gef.: 80,3 % | C, 8,8 % | H, 7,3 % P. |

2. 2,4,6-Trimethylphenyl-1-naphthylphosphinigsäure-2,4-di-tert.-butylphenylester (Variante a): Ausgehend von 29,9 g 1-Brom-2,4,6-trimethylbenzol und 31,05 g 1-Bromnaphthalin erhielt man 71 g beige Kristalle vom Schmelzpunkt 116°C und einem Gehalt von 70% an vorstehender Verbindung [³¹P-NMR: δ_{CDCl₃} = 108,06 ppm]. Aus Aceton/Acetonitril = 1/4 kristallisierten farblose Kristalle vom Schmelzpunkt 118°C.

| | | | |
|---|---|---|---|
| C₃₃H₃₉OP | Ber.: 82,12% | C, 8,14% | H, 6,42% P |
| (482,62) | Gef.: 82,3 % | C, 8,2 % | H, 6,3 % P. |

3. Bis-(4-biphenyl)phosphinigsäure-2,4-di-tert.-butylphenylester (Variante b): Ausgehend von 69,3 g 4-Brombiphenyl erhielt man 78 g farblose Kristalle vom Schmelzpunkt 165°C und einem Gehalt von 92% an vorstehender Verbindung [³¹P-NMR: δ_{CDCl₃} = 107,48 ppm]. Aus 2-Butanon kristallisierten farblose Kristalle vom Schmelzpunkt 168-170°C.

| | | | |
|---|---|---|---|
| C₃₈H₃₉OP | Ber.: 84,10% | C, 7,24% | H, 5,71% P |
| (542,70) | Gef.: 84,2 % | C, 7,3 % | H, 5,6 % P. |

4. Bis-(1-naphthyl)phosphinigsäure-2,4-di-tert.-butylphenylester (Variante b): Ausgehend von 62,1 g 1-Bromnaphthalin erhielt man 72 g farblose Kristalle vom Schmelzpunkt 170 bis 174°C. Aus Acetonitril kristallisierten farblose Kristalle vom Schmelzpunkt 178 bis 180°C.

| | | | |
|---|---|---|---|
| C₃₃H₃₉OP | Ber.: 83,24% | C, 7,19% | H, 6,31% P |
| (490,62) | Gef.: 83,1 % | C, 7,2 % | H, 6,3 % P. |

5. Bis-(1-naphthyl)phosphinigsäure-2,4-di-tert.-butylphenylester (Variante b): Es wurde wie in Beispiel 4 verfahren, jedoch wurde umgekehrt die Lösung des Phosphorigsäure-2,4-di-tert.-butylphenylester-dichlorids zu der Suspension der Grignard-Verbindung zudosiert. Ausgehend von 62,1 g 1-Brom-naphthalin erhielt man 78 g farblose Kristalle vom Schmelzpunkt 174 bis 176°C mit einem Gehalt von 89% an vorstehender Verbindung
[³¹P-NMR: δ_{CDCl₃} = 96,16 ppm].

6. 4,4'-Biphenylen-bis-(1-naphthyl-phosphinigsäure-2,4-di-tert.-butyl-phenylester): Abweichend von der allgemeinen Vorschrift wurden 200 mmol (= 62,4 g) 4,4'-Dibrombiphenyl mit 600 mmol ( = 14,6 g) Magnesiumspänen in 600 ml Tetrahydrofuran unter Einwirkung von Ultraschall (40kHz) grignardiert und anschließend mit 400 mmol ( = 122,9 g) Phosphorigsäure-2,4-di-tert.-butylphenylester-dichlorid in 700 ml Tetrahydrofuran/Heptan = 1/6 umgesetzt. Zu der erhaltenen Suspension wurde das aus 82,8 g (400 mmol) 1-Bromnaphthalin erhaltene Grignard-Reagenz getropft. Man filtrierte, engte das Filtrat im Vakuum ein und erhielt 175 g gelbes Harz mit einem Gehalt von 76% an vorstehender Verbindung [³¹P-NMR: δ_{CDCl₃} = 103,7 ppm]. Aus Aceton kristallisierten blaßgelbe Kristalle vom Schmelzpunkt 255°C.

| | | | |
|---|---|---|---|
| C₆₀H₆₄O₂P₂ | Ber.: 81,98% | C, 7,34% | H, 7,05% P |
| (879,12) | Gef.: 81,7 % | C, 7,5 % | H, 7,2 % P. |

### Allgemeine Vorschriften zur Herstellung der Diarylphosphinigsäure-2.4-di-tert.-butylester:

### Methode A:

Unter Stickstoffatmosphäre und Feuchtigkeitsausschluß wurde aus 300 mmol Organobromverbindung und 300 mmol (= 7,3 g) Magnesiumspänen in 180 ml Tetrahydrofuran die entsprechende Grignardverbindung hergestellt. Anschließend dosierte man die erhaltene Lösung bzw. Suspension der metallorganischen Verbindung innerhalb von 30-40 Minuten unter lebhaftem Rühren bei einer Innentemperatur von -20 bis -10°C zur Lösung von 150 mmol (= 46.1 g) Phosphorigsäure-2,4-di-tert.butylphenylester-dichlorid in 120 ml Tetrahydrofuran/n-Heptan (1:1). Dann ließ man Raumtemperatur annehmen und rührte zur Vervollständigung der Reaktion noch 2,5 Stunden nach. Nach Filtration vom ausgefallenen Magnesiumsalz, das mit ca. 50 ml Petrolether nachgewaschen wurde, entfernte man die Lösungsmittel zunächst im Vakuum der Wasserstrahlpumpe und dann im Hochvakuum. Der verbliebene farblose oder beige Rückstand wurde pulverisiert und im Hochvakuum getrocknet.

### Methode B:

Unter Stickstoffatmosphäre und Feuchtigkeitsausschluß wurde aus 150 mmol Organobromverbindung R¹-Br und 150 mmol (= 3.65 g) Magnesiumspänen in 90 ml Tetrahydrofuran die entsprechende Grignardverbindung R¹-MgBr hergestellt. Anschließend dosierte man die erhaltene Lösung bzw. Suspension der metallorganischen Verbindung innerhalb von 30-40 Minuten unter lebhaftem Rühren bei einer Innentemperatur von -20 bis -10°C zur Lösung von 150 mmol (= 46.1 g) Phosphorigsäure-2,4-di-tert.-butylphenylester-dichlorid in 120 ml Tetrahydrofuran/n-Heptan (1:1). Dann ließ man Raumtemperatur annehmen und rührte zur Vervollständigung der Reaktion noch 2,5 Stunden nach. Unter Stickstoffatmosphäre und Feuchtigkeitsausschluß wurde aus 150 mmol Organobromverbindung R²-Br und 150 mmol (=3.65 g) Magnesiumspänen in 90 ml Tetrahydrofuran die entsprechende Grignardverbindung R²-MgBr hergestellt. Anschließend dosierte man die erhaltene Lösung bzw. Suspension der metallorganischen Verbindung R²-MgBr innerhalb von 30-40 Minuten unter lebhaftem Rühren bei einer Innentemperatur von -20 bis -10°C zur Lösung des zuvor dargestellten Arylphosphorigsäure-2,4-di-tert.-butylphenyl-ester-chlorids. Dann ließ man Raumtemperatur annehmen und rührte zur Vervollständigung der Reaktion noch 2,5 Stunden nach. Nach Filtration vom ausgefallenen Magnesiumsalz, das mit ca. 50 ml Petrolether nachgewaschen wurde, entfernte man die Lösungsmittel zunächst im Vakuum der Wasserstrahlpumpe und dann im Hochvakuum. Der verbliebene farblose oder beige Rückstand wurde pulverisiert und im Hochvakuum getrocknet.

Der Produktgehalt der Rohmaterialien wurde in den angegebenen Fällen durch ³¹P-NMR Spektroskopie ermittelt und lag im allgemeinen zwischen 70 und 95 % (vom Gesamt-P).
In den angegebenen Fällen wurde zur Produktcharakterisierung aus geeigneten Lösungsmitteln kristallisiert.

7. Bis-4-chlorphenylphosphinigsäure-2,4-di-tert.-butylester: Inverse Zugabe: Aus 57.4 g 4-Chlorbrombenzol wurde ein Grignard-Reagenz hergestellt. Dieses kühlte man auf -20°C ab und dosierte eine Lösung von 150 mmol (= 46.1 g) Phosphorigsäure-2,4-di-tert.-butylphenylester-dichlorid in 120 ml Tetrahydrofuran/n-Heptan (1:1) bei einer Innentemperatur von -20 bis -10°C zu. Man erhielt 68 g farbloses Pulver mit Schmp. 99°C und einem Gehalt an vorstehender Verbindung von 88 % [³¹P-NMR: δ_{CDCl₃}=105.05 ppm]. Aus Acetonitril kristallisierten farblose Kristalle mit Schmp. 112°C.

| | | | |
|---|---|---|---|
| C₂₆H₂₉Cl₂OP | Ber.: 67,98 % | C, 6.30 % | H, 6.74 % P |
| (459.397) | Gef.: 67,8 % | C, 6,3 % | H, 6,8 % P |

8. Bis-2-methoxyphenylphosphinigsäure-2,4-di-tert.-butylester: Inverse Zugabe: Aus 56.1 g 2-Bromanisol wurde ein Grignard-Reagenz hergestellt. Dieses kühlte man auf -20°C ab und dosierte eine Lösung von 150 mmol (= 46.1 g) Phosphorigsäure-2,4-di-tert.-butylphenylester-dichlorid in 120 ml Tetrahydrofuran/n-Heptan (1:1) bei einer Innentemperatur von -20 bis -10°C zu. Man erhielt 67 g farblose Kristalle mit Schmp. 97°C und einem Gehalt von 86 % an vorstehender Verbindung [³¹P-NMR: δ_{CDCl₃}= 91.14 ppm]. Aus Acetonitril kristallisierten farblose Kristalle mit Schmp. 113°C.

| | | | |
|---|---|---|---|
| C₂₈H₃₅O₃P | Ber.: 76.64 % | C, 7.83 % | H, 6.87 % P |
| (450.56) | Gef.: 76.8 % | C, 7.7 % | H, 6.9 % P. |

9. Bis-(4-N,N-dimethylaminophenyl)phosphinigsäure-2,4-di-tert.-butylester: Inverse Zugabe: Aus 60.0 g 4-Brom-N,N-dimethylanilin wurde ein Grignard-Reagenz hergestellt. Dieses kühlte man auf -20°C ab und dosierte eine Lösung von 150 mmol (= 46.1 g) Phosphorigsäure-2,4-di-tert.-butylphenylester-dichlorid in 120 ml Tetrahydrofuran/n-Heptan (1:1) bei einer Innentemperatur von -20 bis -10°C zu. Man erhielt 71 g farblose Kristalle mit Schmp. 103°C und einem Gehalt von 86 % an vorstehender Verbindung [³¹P-NMR: δ_{CDCl₃}= 110.41 ppm]. Aus Acetonitril kristallisierten farblose Kristalle mit Schmp. 122°C.

| | | | | |
|---|---|---|---|---|
| C₃₀H₄₁N₂OP | Ber.: 75,60 % | C, 8.67 % | H, 5.88 % | N, 6.50 % P |
| (432.59) | Gef.: 75.5 % | C, 8.8 % | H, 5.9 % | N, 6.6 % P. |

10. 2,4,6-Trimethylphenyl-2-methoxyphenyl-phosphinigsäure-2,4-di-tert.-butylester:
(Methode B).

Ausgehend von 29.9 g 1-Brom-2,4,6-trimethylbenzol und 28.1 g 4-Bromanisol erhielt man 69 g blaßgelbes Pulver mit einem Erweichungspunkt von 48°C und einem Gehalt an vorstehender Verbindung von 90 % [³¹P-NMR: δ_{CDCl₃}= 113.00 ppm].

| | |
|---|---|
| C₃₀H₃₉O₂P | (462.62) |

11. 4-tert-Butylphenyl-1-naphthyl-phosphinigsäure-2,4-di-tert-butylester:
(Methode B).

Ausgehend von 31.1 g 1-Bromnaphthalin und 32.0 g 4-tert-Butylbrombenzol erhielt man 74 g blaßgelbes Pulver mit einem Erweichungspunkt von 74°C und einem Gehalt an vorstehender Verbindung von 90 % [³¹P-NMR: δ_{CDCl₃}= 103.60 ppm].

| | |
|---|---|
| C₃₄H₄₁OP | (496.68) |

12. 1,4-Naphthalin-bis-[1-naphthyl-phosphinigsäure-2,4-di-tert.-butylphenylester]:
(Methode B).

Ausgehend von 31.1 g 1-Bromnaphthalin und 21.4 g 1,4-Dibromnaphthalin erhielt man 64 g blaßgelbes Pulver mit einem Erweichungspunkt von 97 % und einem Gehalt an vorstehender Verbindung von 68 % [³¹P-NMR: δ_{CDCl₃}= 95.46, 95.83 ppm].

| | |
|---|---|
| C₅₈H₆₂O₂P₂ | (853.08) |

13. 1,4-Phenylen-bis-[1-naphthyl-phosphinigsäure-2,4-di-tert.-butylphenylester]:
(Methode B).

Ausgehend von 31.1 g 1-Bromnaphthalin und 17.7 g 1,4-Dibrombenzol erhielt man 60 g blaßgelbes Pulver mit einem Gehalt an vorstehender Verbindung von 66 % [³¹P-NMR: δCDCl₃= 104.0, 104.12 ppm0.

| | |
|---|---|
| C₄₃H₆₀O₂P₂ | (803.02) |

### II. Beispiele für die Verwendung

Für die Versuche wurden die nachstehend aufgelisteten erfindungsgemäßen Diarylphosphinigsäurearylester eingesetzt.
1. 2,4,6-Trimethylphenyl-phenylphosphinigsäure-2,4-di-tert.-butylphenylester gemäß Beispiel 1 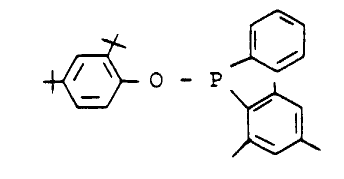
2. 2,4,6-Trimethylphenyl-naphthyl-phosphinigsäure-2,4-di-tert.-butylphenylester gemäß Beispiel 2 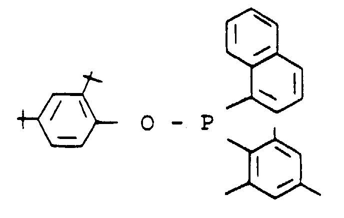
3. Bis-(1-naphthyl)phosphinigsäure-2,4-di-tert.-butylphenylester gemäß Beispiel 4 bzw. 5. 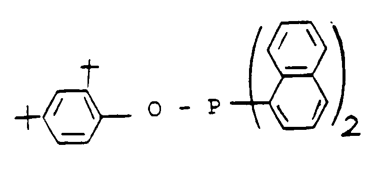 Anwendungsbeispiele 1 bis 3 und Vergleichsbeispiele A bis C 100,0 g unstabilisiertes Polypropylenpulver (Dichte: 0,903 g/cm³; Schmelzindex MFI 230/5:4 g/10 min) wurden in 0,1 g Ca-Stearat als Säureakzeptor sowie mit den in den Tabellen angegebenen Mengen Phosphorverbindung vermischt und mittels eines Laborextruders (Kurzkompressionsschnecke, Schneckendurchmesser 20 mm; Länge 400 mm, Düse 30 mm lang, 2 mm Durchmesser; Drehzahl: 125 Upm; Temperaturprogramm: 200/230/230°C) mehrfach extrudiert. Nach dem 1., 5. und 10. Durchgang wurden Proben aus dem Granulat entnommen und an diesen Proben der Schmelzindex nach DIN 53 735 sowie die Vergilbung als Yellowness Index nach ASTM D 1925-70 gemessen. Außerdem wurden vom Granulat des 1. Durchgangs Spritzplatten mit den Maßen 60 x 60 x 1 mm hergestellt und die Vergilbung sofort und nach Warmlagerung (7 Tage bei 100 °C) gemessen.

Die Ergebnisse sind in den Tabellen 1, 2 und 3 aufgelistet.

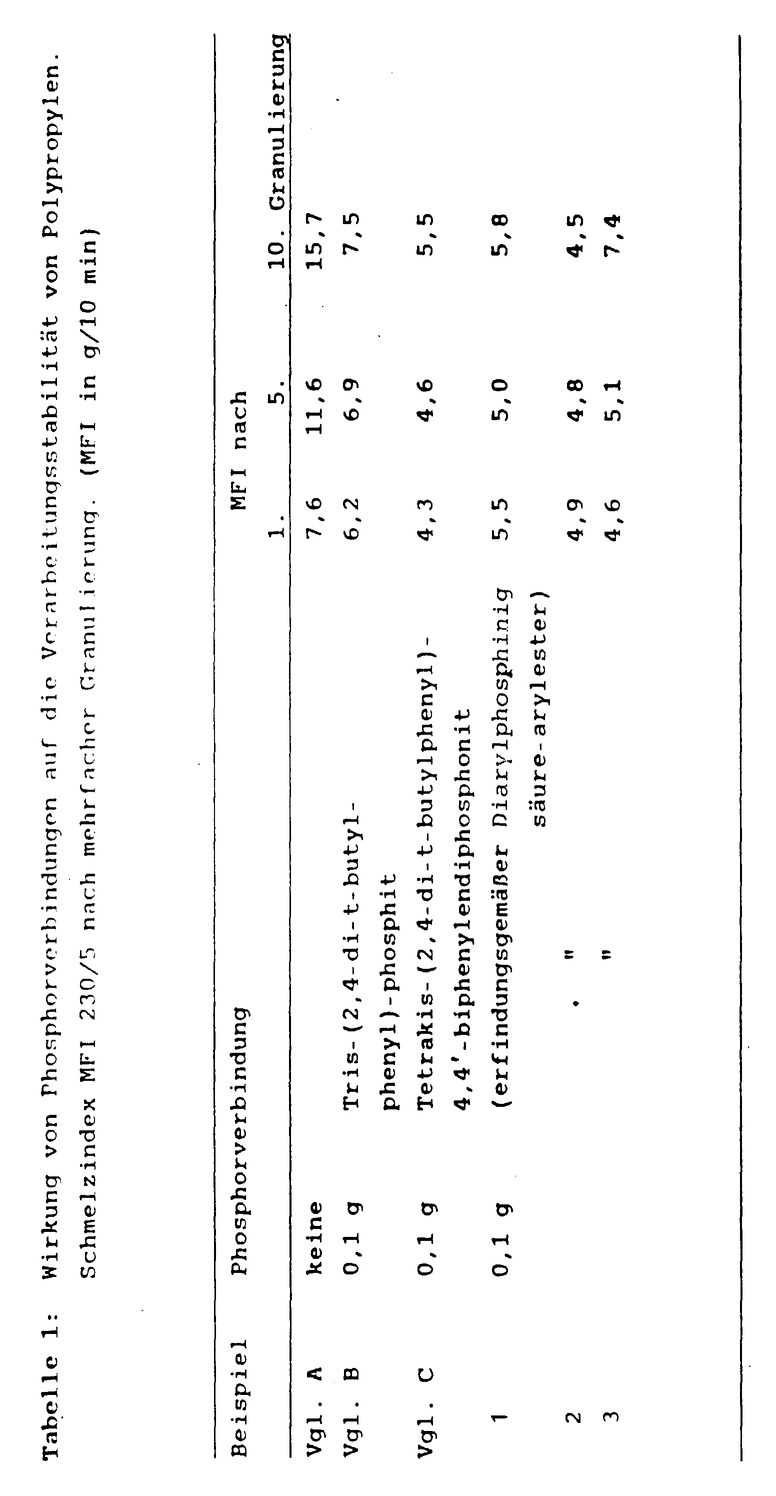

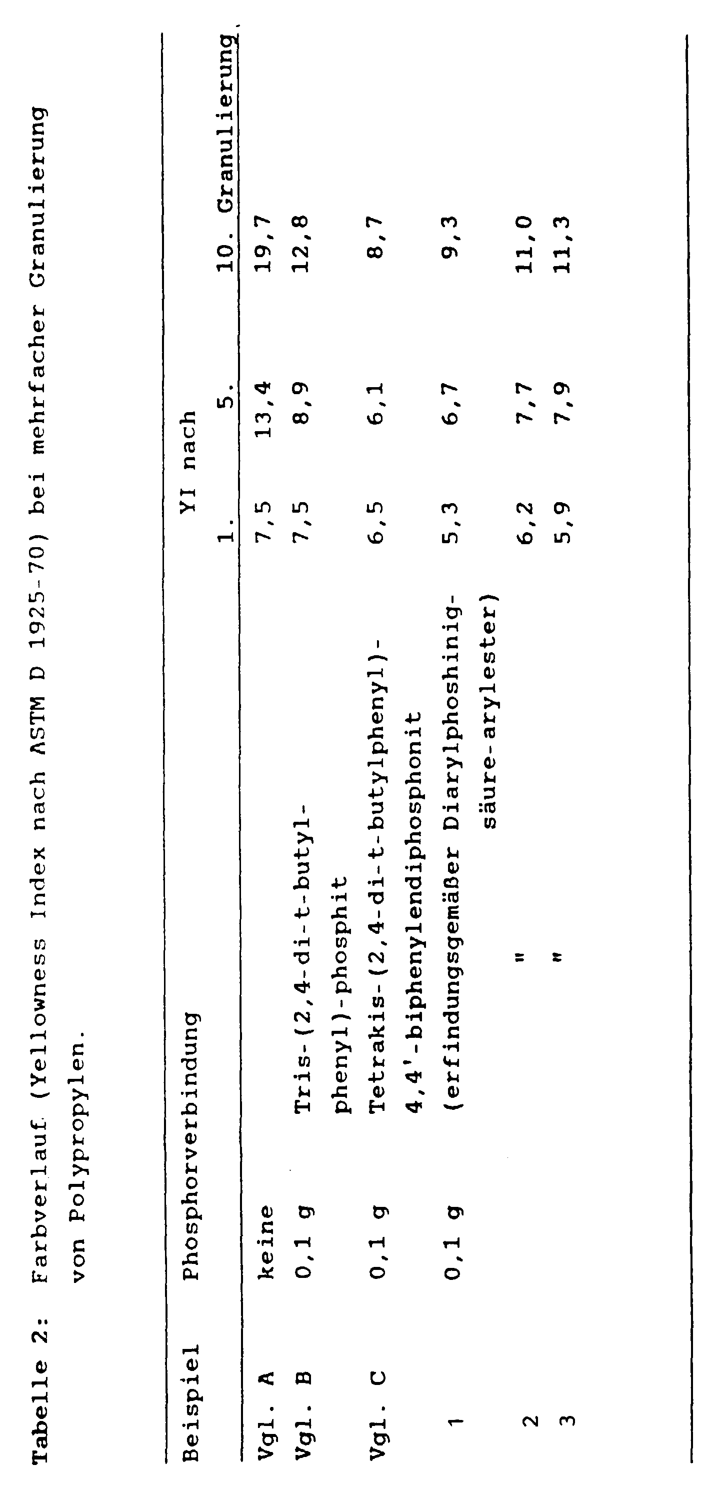

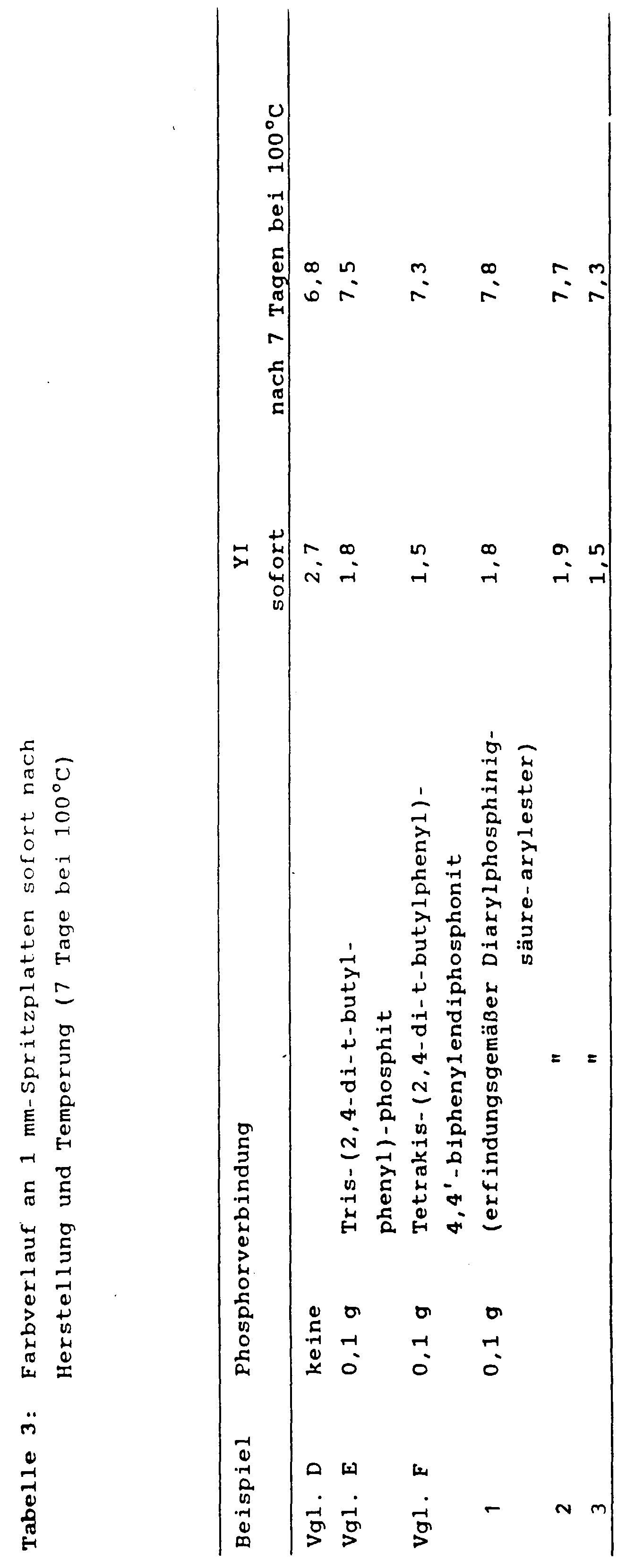

## Patentansprüche

1. Diarylphosphinigsäure-arylester der Formel (I) 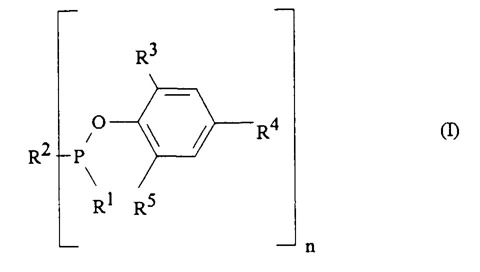
mit n = 1 oder 2, worin R¹ und R² unabhängig voneinander als einwertige Reste einen Phenyl- oder Naphthylrest darstellen, der jeweils 1 bis 5 Substituenten tragen kann, wobei die Substituenten gleich oder verschieden sind und einen nicht-aromatischen Kohlenwasserstoffrest, einen Alkoxyrest, Alkylthiorest oder Dialkylaminorest mit jeweils 1 bis 8 Kohlenstoffatomen, Aryl oder Aryloxy mit jeweils 6 bis 10 Kohlenstoffatomen oder Halogen mit einer Ordnungszahl von 9 bis 35 darstellen und
R² als zweiwertiger Rest einen Phenylen- oder Biphenylenrest, der unsubstituiert ist oder mit bis zu 4 nicht-aromatischen Kohlenwasserstoffresten mit 1 bis 8 Kohlenstoffatomen substituiert ist, oder einen Naphthylenrest, der unsubstituiert ist oder 1 bis 4 nicht-aromatische Kohlenwasserstoffreste mit 1 bis 8 Kohlenstoffatomen als Substituenten trägt, darstellt und R³ und R⁴ einen tert.-Butylrest und R⁵ Wasserstoff oder einen verzweigten oder unverzweigten Kohlenwasserstoffrest mit 1 bis 8 Kohlenstoffatomen darstellen.

2. Kunststoff-Formmasse, enthaltend
a) einen thermoplastischen oder duroplastischen Kunststoff und
b) ein Diarylphosphinigsäure-arylester der Formel (I) 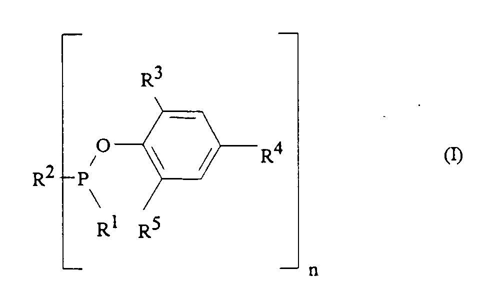 im Verhältnis von (90 bis 99,99) : (0,01 bis 10), mit n = 1 oder 2, worin R¹ und R² unabhängig voneinander als einwertige Reste einen Phenyl- oder Naphthylrest darstellen, der jeweils 1 bis 5 Substituenten tragen kann, wobei die Substituenten gleich oder verschieden sind und einen nicht-aromatischen Kohlenwasserstoffrest, einen Alkoxyrest, Alkylthiorest oder Dialkylaminorest mit jeweils 1 bis 8 Kohlenstoffatomen, Aryl oder Aryloxy mit jeweils 6 bis 10 Kohlenstoffatomen oder Halogen mit einer Ordnungszahl von 9 bis 35 darstellen, und
R² als zweiwertiger Rest einen Phenylen- oder Biphenylenrest, der unsubstituiert ist oder mit bis zu 4 nicht-aromatischen Kohlenwasserstoffresten mit 1 bis 8 Kohlenstoffatomen substituiert ist, oder einen Naphthylenrest, der unsubstituiert ist oder 1 bis 4 nicht-aromatische Kohlenwasserstoffreste mit 1 bis 8 Kohlenstoffatomen als Substituenten trägt, darstellt und R³ und R⁴ einen tert.-Butylrest und R⁵ Wasserstoff oder einen verzweigten oder unverzweigten Kohlenwasserstoffrest mit 1 bis 8 Kohlenstoffatomen darstellen.

3. Kunststoff-Formmasse nach Anspruch 2, dadurch gekennzeichnet, daß der Kunststoff ein Polyolefin, vorzugsweise Polypropylen ist.

4. Kunststoff-Formmasse nach Anspruch 2 oder 3, dadurch gekennzeichnet, daß sie
a) den thermoplastischen oder duroplastischen Kunststoff,
b) den genannten Diarylphosphinigsäure-arylester und
c) einen Ester von c₁) der 3,3-Bis-(3'-t-butyl-4'-hydroxyphenyl)-butansäure der Formel (III) 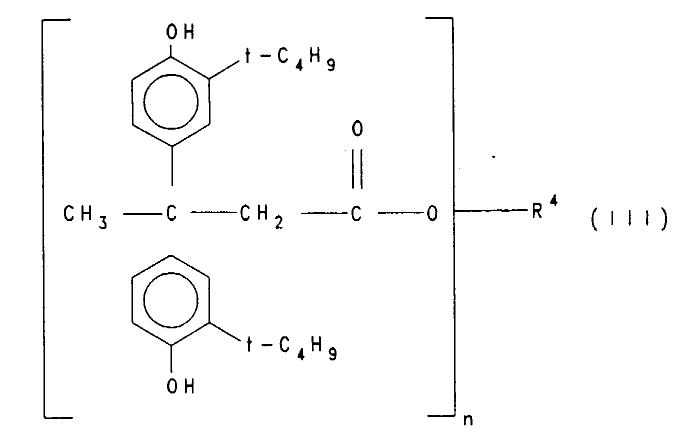 worin n = 1 oder 2 ist und R⁴ einen C₁ bis C₁₈-Alkylrest bedeutet, wenn n = 1 ist, oder einen C₁ bis C₁₂-Alkylenrest bedeutet, wenn n = 2 ist, oder c₂) der β-(3,5-di-t-butyl-4-hydroxy-phenyl)-propionsäure der Formel (IV) 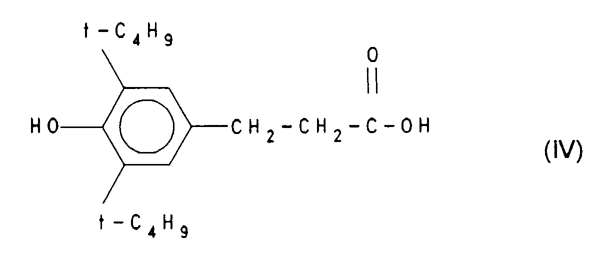 mit einem ein- bis vierwertigen Alkohol im Verhältnis a:b:c von (90 bis 99,98) : (0,01 bis 5): (0,01 bis 5) Gew.-%, vorzugsweise von (98 bis 99,95): (0,025 bis 1): (0,025 bis 1) enthält.

5. Kunststoff-Formmasse nach einem oder mehreren der Ansprüche 2 bis 4, dadurch gekennzeichnet, daß sie zusätzlich Antioxidantien, UV-Absorber, Lichtschutzmittel, Metalldesaktivatoren, peroxidzerstörende Verbindungen, basische Costabilisatoren, Nukleierungsmittel, Füllstoffe, Verstärkungsmittel, Weichmacher, Gleitmittel, Emulgatoren, Pigmente, optische Aufheller, Flammschutzmittel, Antistatika oder Treibmittel enthält.

6. Verfahren zur Herstellung von Diarylphosphinigsäure-arylestern der Formel (I) 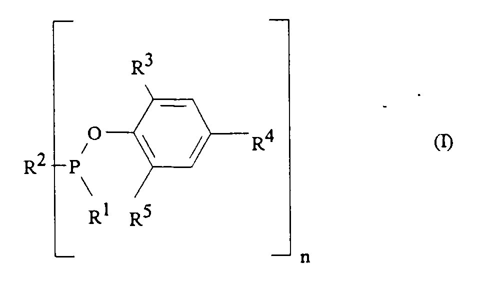
mit n = 1 oder 2, worin R¹ und R² unabhängig voneinander als einwertige Reste einen Phenyl- oder Naphthylrest darstellen, der jeweils 1 bis 5 Substituenten tragen kann, wobei die Substituenten gleich oder verschieden sind und einen nicht-aromatischen Kohlenwasserstoffrest, einen Alkoxyrest, Alkylthiorest oder Dialkylaminorest mit jeweils 1 bis 8 Kohlenstoffatomen, Aryl oder Aryloxy mit jeweils 6 bis 10 Kohlenstoffatomen oder Halogen mit einer Ordnungszahl von 9 bis 35 darstellen, und
R² als zweiwertiger Rest einen Phenylen- oder Biphenylenrest, der unsubstituiert ist oder mit bis zu 4 nicht-aromatischen Kohlenwasserstoffresten mit 1 bis 8 Kohlenstoffatomen substituiert ist, oder einen Naphthylenrest, der unsubstituiert ist oder 1 bis 4 nicht-aromatische Kohlenwasserstoffreste mit 1 bis 8 Kohlenstoffatomen als Substituenten trägt, darstellt und R³ und R⁴ einen tert.-Butylrest und R⁵ Wasserstoff oder einen verzweigten oder unverzweigten Kohlenwasserstoffrest mit 1 bis 8 Kohlenstoffatomen darstellen, dadurch gekennzeichnet, daß man
a) in einer ersten Stufe ein Kohlenwasserstoffhalogend R¹-Hal, worin R¹ die obengenannte Bedeutung hat und das Halogen ein Atomgewicht von mindestens 35 hat, unter Grignard-Bedingungen mit einer mindestens stöchiometrischen Menge an Magnesium zu den entsprechenden Grignardverbindungen R¹-MgHal umsetzt, diese in einer zweiten Stufe mit Phosphorigsäure-arylester-dichlorid unter Bildung des Phosphonigsäureester-halogenids der Formel (II) 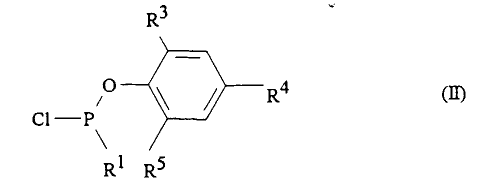 umsetzt, in einer dritten Stufe ein Kohlenwasserstoffhalogenid R²-(Hal)ₙ, worin R² die obengenannte Bedeutung hat, n = 1 oder 2 ist und das Halogen ein Atomgewicht von mindestens 35 hat, unter Grignard-Bedingungen mit einer mindestens stöchiometrischen Menge an Magnesium zu den entsprechenden Grignardverbindungen R²-(MgHal)ₙ umsetzt und diese in einer vierten Stufe mit dem in der zweiten Stufe erhaltenen Phosphonigsäureester-halogenid der Formel (II) unter Bildung der Verbindungen (I) umsetzt oder
b) wenn R¹ = R² und n = 1 ist, in einer ersten Stufe ein Kohlenwasserstoffhalogenid R¹-Hal, worin R¹ und das Halogen die obengenannte Bedeutung hat, unter Grignard-Bedingungen, mit einer mindestens stöchiometrischen Menge an Magnesium zu den entsprechenden Grignardverbindungen R¹-MgHal umsetzt und in einer zweiten Stufe zwei Teile der Grignard-Verbindung mit einem Teil Phosphorigsäure-arylester-dichlorid unter Bildung der Verbindungen (I) umsetzt.

7. Verfahren nach Anspruch 6, dadurch gekennzeichnet, daß das Halogen in den Kohlenwasserstoffhalogeniden Brom ist.

8. Verfahren nach Anspruch 6 oder 7, dadurch gekennzeichnet, daß R¹ in dem Kohlenwasserstoffhalogenid R¹-Hal der Verfahrensvariante a) ein Phenylrest, der mindestens einen der genannten Substituenten, vorzugsweise in 2-Position, trägt, ist.

9. Verfahren nach einem oder mehreren der Ansprüche 6 bis 8, dadurch gekennzeichnet, daß die erste und dritte Stufe der Verfahrensvariante a) und die erste Stufe der Verfahrensvariante b) in einem aprotischen, organischen Lösungsmittel durchgeführt werden.

10. Verfahren nach Anspruch 9, dadurch gekennzeichnet, daß das Lösungsmittel ein Äther ist.

11. Verfahren nach einem oder mehreren der Ansprüche 6 bis 10, dadurch gekennzeichnet, daß die Reaktion unter Einwirkung von Ultraschall durchgeführt wird.

12. Verwendung von Verbindungen der Formel (I), wie in Anspruch 1 definiert, für sich oder in Kombination mit einem phenolischen Antioxydans zur Stabilisierung von Kunststoffen, insbesondere Polymerisationskunststoffen.

## Claims

1. A diarylphosphinous acid aryl ester of the formula (I) 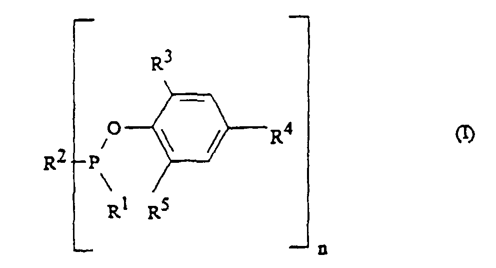
where n = 1 or 2, in which R¹ and R² independently of one another, as monovalent radicals, are a phenyl or naphthyl radical, each of which can carry 1 to 5 substituents, the substituents being identical or different and being a non-aromatic hydrocarbon radical, an alkoxy radical, akylthio radical or dialkylamino radical having in each case 1 to 8 carbon atoms, aryl or aryloxy having in each case 6 to 10 carbon atoms or halogen of atomic number 9 to 35 and
R² as a divalent radical, is a phenylene or biphenylene radical, which is unsubstituted or substituted by up to 4 non-aromatic hydrocarbon radicals having 1 to 8 carbon atoms, or a naphthylene radical, which is unsubstituted or carries 1 to 4 non-aromatic hydrocarbon radicals having 1 to 8 carbon atoms as substituents, and R³ and R⁴ are a tert-butyl radical and R⁵ is hydrogen or a branched or unbranched hydrocarbon radical having 1 to 8 carbon atoms.

2. A plastics molding composition, comprising
a) a thermoplastic or a thermosetting plastic and
b) a diarylphosphinous acid aryl ester of the formula (I) 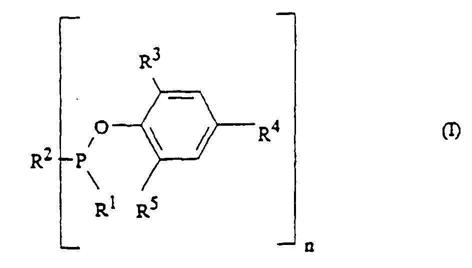 in a ratio of (90 to 99.99) : (0.01 to 10), where n = 1 or 2, in which R¹ and R² independently of one another, as monovalent radicals, are a phenyl or naphthyl radical, each of which can carry 1 to 5 substituents, the substituents being identical or different and being a non-aromatic hydrocarbon radical, an alkoxy radical, akylthio radical or dialkylamino radical having in each case 1 to 8 carbon atoms, aryl or aryloxy having in each case 6 to 10 carbon atoms or halogen of atomic number 9 to 35 and
R² as a divalent radical, is a phenylene or biphenylene radical, which is unsubstituted or substituted by up to 4 non-aromatic hydrocarbon radicals having 1 to 8 carbon atoms, or a naphthylene radical, which is unsubstituted or carries 1 to 4 non-aromatic hydrocarbon radicals having 1 to 8 carbon atoms as substituents, and R³ and R⁴ are a tert-butyl radical and R⁵ is hydrogen or a branched or unbranched hydrocarbon radical having 1 to 8 carbon atoms.

3. A plastics molding composition as claimed in claim 2, wherein the plastic is a polyolefin, preferably polypropylene.

4. A plastics molding composition as claimed in claim 2 or 3, which comprises
a) the thermoplastic or the thermosetting plastic,
b) the diarylphosphinous acid aryl ester mentioned and
c) an ester of c₁) 3,3-bis-(3'-t-butyl-4'-hydroxyphenyl)-butanoic acid of the formula (III) 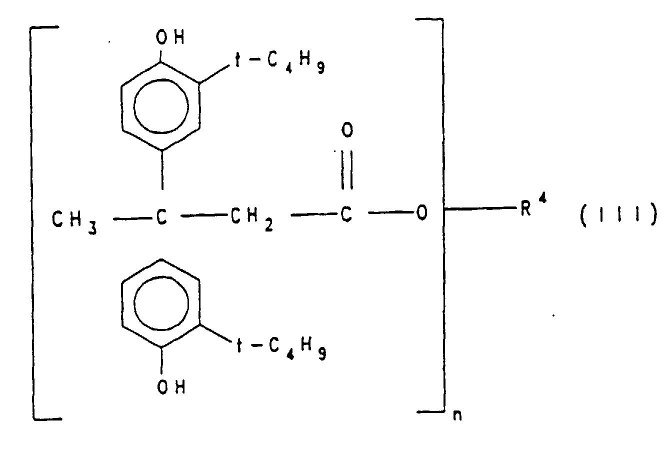 in which n = 1 or 2 and R₄ is a C₁ to C₁₈-alkyl radical, if n = 1, or a C₁ to C₁₂-alkylene radical, if n = 2, or c₂) β-(3,5-di-t-butyl-4-hydroxyphenyl)-propionic acid of the formula (IV) 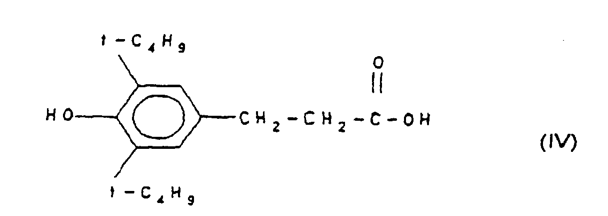 with a mono- to tetrahydric alcohol in a ratio of a:b:c of (90 to 99.98):(0.01 to 5):(0.01 to 5) % by weight, preferably (98 to 99.95):(0.025 to 1):(0.025 to 1).

5. A plastics molding composition as claimed in one or more of claims 2 to 4, which additionally comprises antioxidants, UV absorbers, light stabilizers, metal deactivators, peroxide-destroying compounds, basic costabilizers, nucleating agents, fillers, reinforcing agents, plasticizers, lubricants, emulsifiers, pigments, optical brighteners, flameproofing agents, antistatics or blowing agents.

6. A process for the preparation of a diarylphosphinous acid aryl ester of the formula (I) 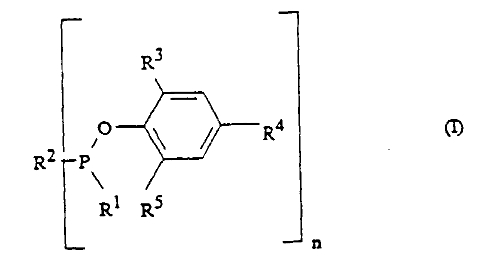
where n = 1 or 2, in which R¹ and R² independently of one another, as monovalent radicals, are a phenyl or naphthyl radical, each of which can carry 1 to 5 substituents, the substituents being identical or different and being a non-aromatic hydrocarbon radical, an alkoxy radical, akylthio radical or dialkylamino radical having in each case 1 to 8 carbon atoms, aryl or aryloxy having in each case 6 to 10 carbon atoms or halogen of atomic number 9 to 35 and
R² as a divalent radical, is a phenylene or biphenylene radical, which is unsubstituted or substituted by up to 4 non-aromatic hydrocarbon radicals having 1 to 8 carbon atoms, or a naphthylene radical, which is unsubstituted or carries 1 to 4 non-aromatic hydrocarbon radicals having 1 to 8 carbon atoms as substituents, and R³ and R⁴ are a tert-butyl radical and R⁵ is hydrogen or a branched or unbranched hydrocarbon radical having 1 to 8 carbon atoms, which comprises
a) in a first stage, reacting a hydrocarbon halide R¹-Hal, in which R¹ has the abovementioned meaning and the halogen has an atomic weight of at least 35, with an at least stoichiometric amount of magnesium under Grignard conditions to give the corresponding Grignard compound R¹-MgHal, reacting this in a second stage with a phosphorous acid aryl ester dichloride to form the phosphinous acid ester halide of the formula (II) 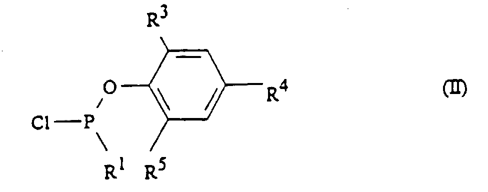 in a third stage, reacting a hydrocarbon halide R²-(Hal)ₙ, in which R² has the abovementioned meaning, n = 1 or 2 and the halogen has an atomic weight of at least 35, with an at least stoichiometric amount of magnesium under Grignard conditions to give the corresponding Grignard compound R²-(MgHal)ₙ, and reacting this in a fourth stage with the phosphinous acid ester halide of the formula (II) obtained in the second stage, to form the compound (I) or
b) if R¹ = R² and n = 1, in a first stage, reacting a hydrocarbon halide R¹-Hal, in which R¹ and the halogen have the abovementioned meaning, with an at least stoichiometric amount of magnesium under Grignard conditions to give the corresponding Grignard compound R¹-MgHal and, in a second stage, reacting two parts of the Grignard compound with one part of phosphorous acid aryl ester dichloride to form the compound (I).

7. The process as claimed in claim 6, wherein the halogen in the hydrocarbon halide is bromine.

8. The process as claimed in claim 6 or 7, wherein R¹ in the hydrocarbon halide R¹-Hal of process variant a) is a phenyl radical which carries at least one of the substituents mentioned, preferably in the 2-position.

9. The process as claimed in one or more of claims 6 to 8, wherein the first and third stage of process variant a) and the first stage of process variant b) are carried out in an aprotic, organic solvent.

10. The process as claimed in claim 9, wherein the solvent is an ether.

11. The process as claimed in one or more of claims 6 to 10, wherein the reaction is carried out under the action of ultra-sound.

12. The use of a compound of the formula (I) as defined in claim 1, by itself or in combination with a phenolic antioxidant, for stabilizing a plastic, in particular a polymerization plastic.

## Revendications

1. Ester arylique de l'acide diarylphosphineux de formule (I) 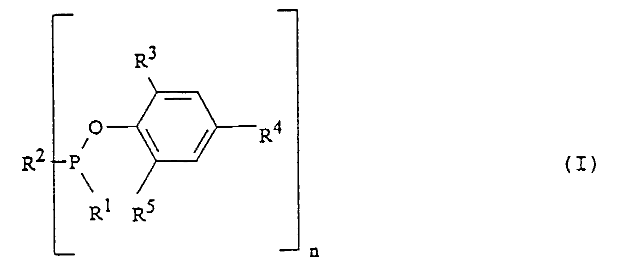
avec n = 1 ou 2, dans laquelle R¹ et R², indépendamment l'un de l'autre, en tant que radicaux monovalents représentent un radical phényle ou naphtyle, qui peuvent chacun porter 1 à 5 substituants, les substituants étant identiques ou différents et représentent un radical hydrocarboné non aromatique, un radical alcoxy, un radical alkylthio ou un radical dialkylamino avec chacun de 1 à 8 atomes de carbone, aryle ou aryloxy, chacun avec 6 à 10 atomes de carbone ou halogène avec un nombre atomique de 9 à 35, et
R² en tant que radical bivalent représente un radical phénylène ou biphénylène qui est non substitué ou substitué par jusqu'à 4 radicaux hydrocarbonés non aromatiques avec 1 à 8 atomes de carbone, ou un radical naphtylène qui est non substitué ou qui porte comme substituants de 1 à 4 radicaux hydrocarbonés non aromatiques avec 1 à 8 atomes de carbone, et R³ et R⁴ représentent un radical tert-butyle, et R⁵ représente l'hydrogène ou un radical hydrocarboné ramifié ou non ramifié avec 1 à 8 atomes de carbone.

2. Masse de moulage plastique contenant
a) une matière plastique thermoplastique ou thermodurcissable et
b) un ester d'aryle de l'acide diarylphosphineux de formule (I) 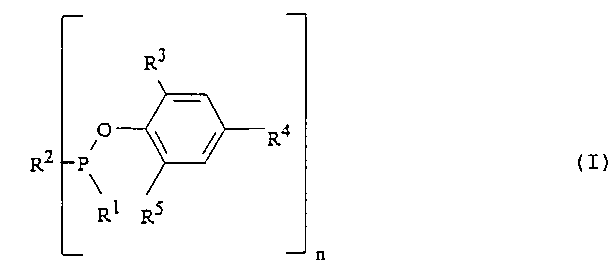 dans un rapport (de 90 à 99,99):(de 0,01 à 10), avec n = 1 ou 2, dans laquelle R¹ et R², indépendamment l'un de l'autre, en tant que radicaux monovalents représentent un radical phényle ou naphtyle, qui peuvent chacun porter 1 à 5 substituants, les substituants étant identiques ou différents et représentent un radical hydrocarboné non aromatique, un radical alcoxy, un radical alkylthio ou un radical dialkylamino avec chacun de 1 à 8 atomes de carbone, aryle ou aryloxy, chacun avec 6 à 10 atomes de carbone ou halogène avec un nombre atomique de 9 à 35, et
R² en tant que radical bivalent représente un radical phénylène ou biphénylène qui est non substitué ou substitué par jusqu'à 4 radicaux hydrocarbonés non aromatiques avec 1 à 8 atomes de carbone, ou un radical naphtylène qui est non substitué ou qui porte comme substituants de 1 à 4 radicaux hydrocarbonés non aromatiques avec 1 à 8 atomes de carbone, et R³ et R⁴ représentent un radical tert-butyle, et R⁵ représente l'hydrogène ou un radical hydrocarboné ramifié ou non ramifié avec 1 à 8 atomes de carbone.

3. Masse de moulage en matière plastique selon la revendication 2, caractérisée en ce que la matière plastique est une polyoléfine, de préférence le polypropylène.

4. Masse de moulage en matière plastique selon la revendication 2 ou 3, caractérisée en ce qu'elle contient
a) la matière plastique thermoplastique ou thermodurcissable,
b) l'ester d'aryle de l'acide diarylphosphineux précité et
c) un ester de c₁) de l'acide 3,3-bis-(3'-tert-butyl)-4'-hydroxyphényl)-butanoïque de formule (III) 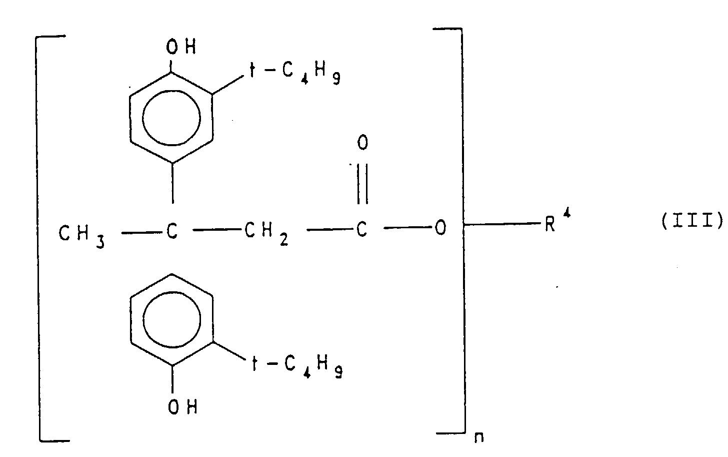 dans laquelle n = 1 ou 2, et R⁴ représente un radical alkyle en C₁-C₁₈ lorsque n = 1 ou un radical alkylène en C₁-C₁₂ lorsque n = 2, ou c₂) de l'acide β-(3,5-di-tert-butyl-4-hydroxyphényl)-propionique de formule (IV) 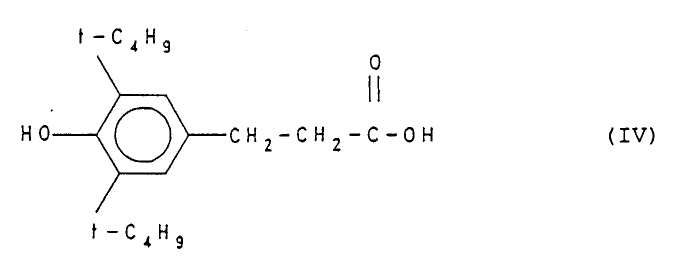 avec un alcool mono- à tétrafonctionnel dans un rapport de a:b:c de (90 à 99,98):10,01 à 5):(0,01 à 5) % en poids, de préférence de (98 à 99,95):(0,025 à 1):(0,025 à 1) % en poids.

5. Masse de moulage en matière plastique selon une ou plusieurs des revendications 2 à 4, caractérisée en ce qu'elle contient de plus des anti-oxydants, des absorbeurs d'UV, des agents photoprotecteurs, des désactivateurs de métaux, des composés destructeurs de peroxydes, des co-stabilisants basiques, des agents de nucléation, des charges, des agents de renfort, des plastifiants, des agents démoulants, des émulsionnants, des pigmentsm des azurants optiques, des ignifugeants, des anti-statiques ou des agents porogènes.

6. Procédé pour la préparation des esters d'aryle de l'acide diarylphosphineux de formule (I) : 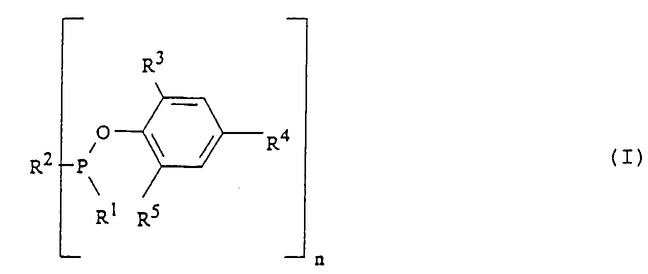 avec n = 1 ou 2, dans laquelle R¹ et R², indépendamment l'un de l'autre, en tant que radicaux monovalents représentent un radical phényle ou naphtyle, qui peuvent chacun porter 1 à 5 substituants, les substituants étant identiques ou différents et représentent un radical hydrocarboné non aromatique, un radical alcoxy, un radical alkylthio ou un radical dialkylamino avec chacun de 1 à 8 atomes de carbone, aryle ou aryloxy chacun avec 6 à 10 atomes de carbone ou halogène avec un nombre atomique de 9 à 35, et
R² en tant que radical bivalent représente un radical phénylène ou biphénylène qui est non substitué ou substitué par jusqu'à 4 radicaux hydrocarbonés non aromatiques avec 1 à 8 atomes de carbone, ou un radical naphtylène qui est non substitué ou qui porte comme substituants de 1 à 4 radicaux hydrocarbonés non aromatiques avec 1 à 8 atomes de carbone, et R³ et R⁴ représentent un radical tert-butyle, et R⁵ représente l'hydrogène ou un radical hydrocarboné ramifié ou non ramifié avec 1 à 8 atomes de carbone, caractérisé en ce que
a) on fait réagir dans une première étape l'halogénure hydrocarboné R¹-Hal, dans lequel R¹ a la signification donnée ci-dessus et dont l'halogène a un poids atomique d'au moins 35, dans les conditions de réaction de Grignardm avec une quantité au moins stoechiométrique de magnésium pour obtenir le composé de Grignard correspondant R¹-MgHal, en faisant réagir celui-ci dans une deuxième étape avec le dichlorure d'ester d'aryle de l'acide phosphoreux en formant l'halogénure de l'ester de l'acide phosphonique de formule (II) 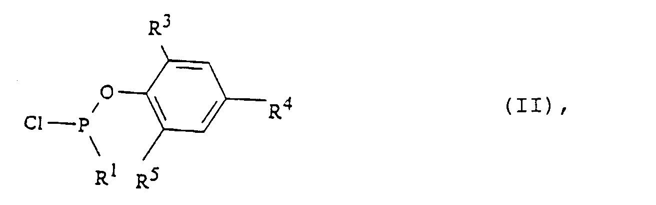 dans une troisième étapem on fait réagir un halogénure hydrocarboné R²-(Hal)ₙ, dans lequel R² a la signification donnée ci-dessus, n = 1 ou 2, et l'halogène a un poids atomique d'au moins 35, dans les conditions de réaction de Grignard, avec une quantité au moins stoechiométrique de magnésium pour obtenir les composés de Grignard correspondants R²-(MgHal)ₙ et en faisant réagir ceux-ci dans une quatrième étape avec l'halogénure de l'ester de l'acide phosphonique de formule (II) obtenu dans la deuxième étape en formant des composés (I), ou
b) lorsque R¹ = R² et n = 1, en faisant réagir dans une première étape un halogénure hydrocarboné R¹-Hal dans lequel R¹ et l'halogène ont la signification donnée ci-dessus, dans les conditions de réaction de Grignard, avec une quantité au moins stoechiométrique de magnésium pour obtenir les composés de Grignard correspondants R¹-MgHal et dans une deuxième étape, deux parties du composé de Grignard avec une partie de dichlorure d'ester d'aryle de l'acide phosphoreux, en formant des composés (I).

7. Procédé selon la revendication 6, caractérisé en ce que l'halogène dans les halogénures hydrocarboné est le brome.

8. Procédé selon la revendication 6 ou 7, caractérisé en ce que R¹ dans l'halogénure hydrocarboné R¹-Hal de la variante de procédé a) est un radical phényle qui porte au moins l'un des substituants précités, de préférence en position 2.

9. Procédé selon une ou plusieurs des revendications 6 à 8, caractérisé en ce que l'on met en oeuvre la première et la troisième étape de la variante de procédé a) et la première étape de la variante de procédé b) dans un solvant aprotique organique.

10. Procédé selon la revendication 9, caractérisé en ce que le solvant est l'éther.

11. Procédé selon une ou plusieurs des revendications 6 à 10, caractérisé en ce que l'on met en oeuvre la réaction sous l'effet des ultrasons.

12. Utilisation des composés de formule (I) tels que définis dans la revendication 1, seuls ou en combinaison avec un anti-oxydant phénolique pour la stabilisation de matières plastiques, plus particulièrement des matières plastiques obtenues par polymérisation.
